(19) Europäisches Patentamt / European Patent Office / Office européen des brevets

(11) **EP 3 485 525 B1**

(12) **FASCICULE DE BREVET EUROPEEN**

(45) Date de publication et mention
de la délivrance du brevet:
**10.05.2023 Bulletin 2023/19**

(21) Numéro de dépôt: **17751438.7**

(22) Date de dépôt: **12.07.2017**

(51) Classification Internationale des Brevets (IPC):
**H01M 50/403** (2021.01)   **H01M 50/42** (2021.01)
**H01M 50/426** (2021.01)   **H01M 50/497** (2021.01)

(52) Classification Coopérative des Brevets (CPC):
**H01M 50/403; H01M 50/42; H01M 50/426;
H01M 50/497**

(86) Numéro de dépôt international:
**PCT/FR2017/051914**

(87) Numéro de publication internationale:
**WO 2018/011521 (18.01.2018 Gazette 2018/03)**

(54) **MATERIAU A CONDUCTION IONIQUE POUR GENERATEUR ELECTROCHIMIQUE ET PROCEDES DE FABRICATION**

IONENLEITENDES MATERIAL FÜR ELEKTROCHEMISCHEN GENERATOR UND HERSTELLUNGSVERFAHREN

IONICALLY CONDUCTIVE MATERIAL FOR ELECTROCHEMICAL GENERATOR AND PRODUCTION METHODS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.07.2016 FR 1656760**

(43) Date de publication de la demande:
**22.05.2019 Bulletin 2019/21**

(73) Titulaires:
• **Institut Polytechnique de Grenoble
38031 Grenoble Cedex 1 (FR)**
• **Centre National de la Recherche Scientifique
CNRS
75016 Paris (FR)**

(72) Inventeurs:
• **SANCHEZ, Jean-Yves
38330 Saint-Ismier (FR)**
• **IOJOIU, Cristina
38210 Vourey (FR)**
• **MOLMERET, Yannick
38100 Grenoble (FR)**
• **ANTONELLI, Claire
28007 Madrid (ES)**

(74) Mandataire: **Hautier IP
20, rue de la Liberté
06000 Nice (FR)**

(56) Documents cités:
• **BOOR SINGH LALIA ET AL: "Nanocrystalline
cellulose-reinforced composite mats for
lithium-ion batteries: electrochemical and
thermomechanical performance", JOURNAL OF
SOLID STATE ELECTROCHEMISTRY, vol. 17, no.
3, 3 octobre 2012 (2012-10-03), pages 575-581,
XP055214978, ISSN: 1432-8488, DOI:
10.1007/s10008-012-1894-1**
• **AZIZI SAMIR M A S ET AL: "Cellulose
nanocrystals reinforced poly(oxyethylene)",
POLYMER, ELSEVIER SCIENCE PUBLISHERS
B.V, GB, vol. 45, no. 12, 1 mai 2004 (2004-05-01),
pages 4149-4157, XP004508700, ISSN: 0032-3861,
DOI: 10.1016/J.POLYMER.2004.03.094**
• **MY AHMED SAÏD AZIZI SAMIR ET AL:
"Cross-Linked Nanocomposite Polymer
Electrolytes Reinforced with Cellulose
Whiskers", MACROMOLECULES, vol. 37, no. 13,
6 mars 2004 (2004-03-06), pages 4839-4844,
XP055350127, US ISSN: 0024-9297, DOI:
10.1021/ma049504y**

Remarques:
Le dossier contient des informations techniques présentées postérieurement au dépôt de la demande et ne figurant pas dans le présent fascicule.

Remarques:
Le dossier contient des informations techniques présentées postérieurement au dépôt de la demande et ne figurant pas dans le présent fascicule.

**Description**

**Domaine de l'invention**

Le domaine de cette invention est celui des matériaux à conduction ionique qui peuvent être utilisés dans des générateurs électrochimiques, par exemple dans les séparateurs, les électrolytes solides polymères ou les électrodes.
En particulier, la présente invention concerne un matériau à conduction ionique comprenant deux polymères A et B, distincts l'un de l'autre, et une charge de renfort. La présente invention concerne également des films, notamment des films infiltrés, à base de ce matériau à conduction ionique et des procédés de fabrication de ces films.

**Arrière-plan technologique**

Les dispositifs électrochimiques, comme les générateurs électrochimiques que sont les piles et les batteries, sont tous construits selon le même modèle : une cathode (positive), une anode (négative), et, entre les deux, un électrolyte qui permet le passage des ions mais pas le passage des électrons. Souvent, l'électrolyte est constitué de sel(s) dissous dans un solvant ou un mélange de solvants polaires aprotiques : ces électrolytes liquides sont couramment utilisés dans les batteries commerciales dites lithium-ion. Les solvants polaires aprotiques peuvent être partiellement ou totalement substitués par des liquides ioniques pour diminuer l'inflammabilité des électrolytes. L'électrolyte étant le constituant le plus résistif de la batterie ou plus généralement du générateur électrochimique, il convient d'en diminuer drastiquement l'épaisseur.
Les électrodes des générateurs électrochimiques étant très proches, un séparateur est ajouté entre l'anode et la cathode afin d'éviter tout contact entre les deux électrodes et ainsi prévenir les courts-circuits. Le séparateur est généralement constitué d'un matériau poreux dont la porosité est remplie par l'électrolyte liquide. Les plus utilisés sont des films macroporeux de polyoléfines à base de polyéthylène comme les Solupor®7P03A et Solupor®10P05A, ou de polypropylène comme le Celgard®2400. D'autres séparateurs macroporeux, qui associent 3 films poreux de polypropylène/polyéthylène/polypropylène, comme le Celgard®2325, peuvent également être utilisés mais leur remplissage par l'électrolyte liquide est beaucoup plus lent. Un des inconvénients de tous ces séparateurs, et surtout du Celgard®2325, est qu'ils diminuent fortement la conductivité de l'électrolyte (D. Djian, F. Alloin, S. Martinet, H. Ligner, J-Y. Sanchez, J. Power Sources 172 (2007) 416).
Dans certains cas, le même matériau peut assurer la fonction de séparateur et d'électrolyte : c'est le cas des électrolytes solides polymères où le polymère agit luimême comme un solvant macromoléculaire, dissolvant les sels, et assurant la mobilité des ions. Il s'agit alors, par exemple, d'un film constitué d'un polymère de la famille du poly(oxyéthylène) (POE ou PEO) dans lequel un sel de lithium a été dissous (M. Gauthier, A. Bélanger, P. Bouchard, B. Kapfer, S. Ricard, G. Vassort, M. Armand, J-Y. Sanchez, L. Krause, Large lithium polymer battery development The immobile solvent concept, J. Power Sources, 54 (1995) 163). Ces électrolytes solides polymères permettent le fonctionnement des batteries entre 60 et plus de 100°C mais ne permettent pas leur fonctionnement à température ambiante et sub-ambiante et, donc, de répondre aux besoins de l'électronique portable. Ils peuvent toutefois être imprégnés par des solvants liquides et/ou des liquides ioniques pour obtenir un film dense gonflé par l'introduction desdits solvants qui est conducteur à basse température.
Dans les générateurs électrochimiques, comme les piles primaires, les batteries, les supercondensateurs ou les piles à combustible, le séparateur rempli d'électrolyte liquide ou l'électrolyte solide polymère, doit être le plus fin possible. Cela permet de diminuer sa résistance électrique qui est proportionnelle à l'épaisseur et d'améliorer le rendement du générateur. Cependant, il est également important que le séparateur ou l'électrolyte solide polymère soit réalisé dans un matériau ayant de bonnes propriétés mécaniques afin de prévenir les risques de court-circuit de façon optimale.
En particulier, dans les batteries au lithium, il est important d'avoir un séparateur ou un électrolyte solide polymère réalisé dans un matériau ayant de bonnes propriétés mécaniques. En effet, dans ces batteries, des phénomènes de croissance dendritique peuvent se produire. La croissance dendritique apparait lors de la recharge de la batterie, le lithium forme alors des boules ou des aiguilles qui peuvent traverser le séparateur, ce qui engendre un court-circuit. C'est un mécanisme de défaillance particulièrement dangereux qui peut aller jusqu'à un incendie. Il est donc capital d'empêcher ce phénomène.
Afin d'améliorer les propriétés mécaniques des matériaux utilisés dans les séparateurs et les électrolytes solides polymères tout en permettant de conserver une épaisseur raisonnable de ces derniers, il a été proposé de rajouter des charges de renforts dans ces matériaux.
La demande de brevet US2014/0227605 A1 divulgue un film de polyoléfine comprenant des nanofibres de cellulose. Ce film renforcé peut être utilisé comme séparateur.
Le document Lalia, B.S., Samad, Y.A. & Hashaikeh, R. Nanocrystalline cellulose-reinforced composite mats for lithium-ion batteries: electrochemical and thermomechanical performance, J Solid State Electrochem 17, 575-581 (2013), divulgue un composite à base d'un copolymère de fluorovinylidène et d'hexafluoropropylène, renforcé par de la cellulose nanocristalline.

Le document Azizi Samir M. A. S, Alloin F., Sanchez J.-Y., Dufresne A., Cellulose nanocrystals reinforced poly(oxyethylene), Polymer, 45 (12), 4149-4157 (2004), divulgue un composite à base de poly(oxyéthylène), et de cellulose nanocristalline.

Le document Azizi Samir M. A. S, Alloin F., Sanchez J.-Y., Dufresne A., Cross-Linked Nanocomposite Polymer Electrolytes Reinforced with Cellulose Whiskers, Macromolecules, American Chemical Society, 2004, 37 (13), 4839-4844 (2004), divulgue un composite à base de poly(oxyéthylène) réticulé, et de cellulose cristalline fibrillaire, communément désignée par le terme anglo-saxon *whiskers* de cellulose.

Néanmoins, ces matériaux utilisés dans les séparateurs ou les électrolytes solides polymères ne sont pas parfaits et il existe toujours une demande pour de nouveaux matériaux ayant de bonnes propriétés mécaniques et qui empêchent la croissance dendritique.

## Objectifs

Dans ce contexte, la présente invention vise à satisfaire au moins l'un des objectifs suivants.

L'un des objectifs essentiels de l'invention est de fournir un matériau à conduction ionique qui puisse être utilisé dans un générateur électrochimique, par exemple dans les séparateurs, les électrolytes solides polymères ou les électrodes.

L'un des objectifs essentiels de l'invention est de fournir un matériau à conduction ionique ayant de bonnes propriétés mécaniques.

L'un des objectifs essentiels de l'invention est de fournir un matériau à conduction ionique ayant une bonne conductivité ionique.

L'un des objectifs essentiels de l'invention est de fournir un matériau à conduction ionique qui empêche la croissance dendritique dans les batteries au lithium.

L'un des objectifs essentiels de l'invention est de fournir un matériau à conduction mixte ionique/électronique ayant de bonnes conductions ioniques et électroniques et ayant aussi de bonnes propriétés mécaniques.

L'un des objectifs essentiels de l'invention est de fournir un film à base d'un matériau à conduction ionique ayant tout ou partie des caractéristiques ci-dessus.

L'un des objectifs essentiels de l'invention est de fournir un procédé de fabrication d'un film à base d'un matériau à conduction ionique ayant tout ou partie des caractéristiques ci-dessus.

L'un des objectifs essentiels de l'invention est de fournir un séparateur, un électrolyte solide polymère ou une électrode à base d'un matériau à conduction ionique ayant tout ou partie des caractéristiques ci-dessus.

L'un des objectifs essentiels de l'invention est de fournir un générateur électrochimique comprenant un séparateur, un électrolyte solide polymère ou une électrode à base d'un matériau à conduction ionique ayant tout ou partie des caractéristiques ci-dessus.

## Brève description de l'invention

Ces objectifs, parmi d'autres, sont atteints par la présente invention qui concerne en premier lieu un matériau à conduction ionique pour générateur électrochimique caractérisé en ce qu'il comprend :

1. au moins un polymère A, distinct de B, ayant une conductivité ionique comprise entre $10^{-5}$ et $10^{-3}$ S/cm,

2. au moins un polymère B ayant une tenue mécanique caractérisée par un module de conservation $\geq$ 200 MPa, par exemple compris entre 200 et 5000 MPa ou entre 350 et 1500 MPa,

3. au moins une charge de renfort C.

De façon surprenante, il a été découvert qu'un tel matériau, c'est-à-dire comprenant un mélange de deux polymères distincts et d'au moins une charge de renfort possédait à la fois de bonnes propriétés mécaniques et une bonne conductivité ionique. Ce type de matériau peut donc être utilisé dans des générateurs électrochimiques.

L'invention a également pour objet des films à base de ce type de matériau. Ceux-ci peuvent être fins et conserver une bonne tenue mécanique, ils peuvent donc être utilisés comme séparateur ou électrolyte solide polymère dans un générateur électrochimique. De plus, de façon surprenante, il a été observé que ces films empêchent la croissance dendritique.

L'invention a également pour objet un film infiltré à base de ce type de matériau et trois procédés de synthèse de ces films.

L'invention concerne également un séparateur, un électrolyte solide polymère ou une électrode à base de ce matériau à conduction ionique.

L'invention concerne également un générateur électrochimique, comme une pile, une batterie, un supercondensateur ou un vitrage électrochrome comprenant un tel matériau à conduction ionique.

## Brève description des figures

Les figures 1A et 1B représentent des images au microscope électronique à balayage, MEB, d'un film obtenu selon l'exemple 1.

Les figures 2A et 2B représentent des images au microscope MEB d'un film selon l'invention obtenu selon l'exemple 2.

Les figures 3A et 3B représentent des images au microscope MEB d'un film selon l'invention obtenu selon l'exemple 3.

Les figures 4A et 4B représentent des images au microscope MEB d'un film selon l'invention obtenu selon l'exemple 4.

La figure 5 représente les courbes de caractérisation mécanique par DMA des films selon les exemples 1 à 4.

La figure 6 représente les courbes obtenues lors de la caractérisation par essai de traction des films 2 à 4.

La figure 7 représente les courbes obtenues lors de la caractérisation thermique, par analyse thermogravimétrique (ATG), des films selon les exemples 6 à 9 avec la courbe M1 représentant l'exemple 7, la courbe M2 l'exemple 6, la courbe M3 l'exemple 8 et la courbe M4 l'exemple 9.

La figure 8A représente l'image au microscope MEB d'un film obtenu selon l'exemple 7. La figure 8B représente l'image au microscope MEB d'un film obtenu selon l'exemple 6. La figure 8C représente l'image au microscope MEB d'un film obtenu selon l'exemple 8. La figure 8D représente l'image au microscope MEB d'un film obtenu selon l'exemple 9.

La figure 9 représente les courbes de caractérisation mécanique en élongation des films selon les exemples 6 à 9 avec la courbe M1 représentant l'exemple 7, la courbe M2 l'exemple 6, la courbe M3 l'exemple 8 et la courbe M4 l'exemple 9.

La figure 10 représente les mesures de conductivités des films selon les exemples 6 à 9 avec la courbe M1 représentant l'exemple 7, la courbe M2 l'exemple 6, la courbe M3 l'exemple 8 et la courbe M4 l'exemple 9.

La figure 11 représente les courbes de caractérisation mécanique par DMA des films selon les exemples 14 à 16.

La figure 12 représente les mesures de conductivités des films selon les exemples 14, 17 et 18.

La figure 13 représente les mesures de conductivités des films selon les exemples 17, 20 et 21.

La figure 14 représente les courbes de caractérisation mécanique par DMA des films selon les exemples 22 et 23.

La figure 15 représente les courbes de caractérisation mécanique en élongation des films selon les exemples 22 et 23.

La figure 16 représente un mode de réalisation particulier d'un film réalisé à partir de trois films selon l'invention.

## Description détaillée de l'invention

*MATERIA U A COND UCTION IONIQUE*

On détaille ci-après les caractéristiques préférées du matériau à conduction ionique 1-2 - 3 selon l'invention.

Le polymère A est un polymère ayant une conductivité ionique comprise entre $10^{-5}$ et $10^{-3}$ S/cm. Cette conductivité est mesurée par spectrométrie d'impédance électrochimique à température ambiante.

Par exemple, le polymère A est choisi parmi les polymères comprenant une chaine oxyalkylène dans la chaine principale ou dans une chaine pendante.

Selon un mode de réalisation de l'invention, le polymère A est un polymère solvatant. Par "solvatant", on entend, par exemple, capable de dissoudre un ou plusieurs sels de métal alcalin ou alcalino-terreux, par exemple des sels de lithium, de sodium, de magnésium ou de calcium. Pour cela, le polymère A contient des hétéroatomes (N, O, S) et par exemple des liaisons de type éther et/ou amine.

Un polymère solvatant est un polymère qui comporte des unités solvatantes contenant au moins un hétéroatome choisi parmi le soufre, l'oxygène, l'azote et le phosphore.

Selon un mode de réalisation de l'invention, le polymère A est choisi parmi les polymères solvatants réticulés ou non réticulés, qui portent éventuellement des groupes ioniques greffés.

A titre d'exemples de polymères solvatants, on peut citer :

- les homopolymères de type polyéther choisis parmi les poly(oxyéthylène), les poly(oxypropylène), les poly(oxytriméthylène) et les poly(oxytétraméthylène), lesdits homopolymères ayant une structure linéaire, une structure en peigne, une structure en étoile ou une structure en dendrimères ;
- les copolymères à bloc ou les copolymères greffés du type polyéther, formant ou non un réseau. Parmi ces copolymères à blocs, on peut citer ceux dans lesquels certains blocs portent des fonctions qui ont des propriétés rédox et/ou certains blocs possèdent des groupements réticulables et/ou certains blocs possèdent des fonctions ioniques;
- les copolymères statistiques, aléatoires ou alternés contenant des unités récurrentes oxyalkylène, formant ou non un réseau. Parmi les unités oxyalkylène, on peut citer l'unité oxyéthylène, l'unité oxypropylène, l'unité 2-chlorométhyloxyéthylène, et l'unité oxyéthylèneoxyméthylène, qui proviennent respectivement de l'ouverture de cycle de l'oxyde d'éthylène, de l'oxyde de propylène, de l'épichlorhydrine et du dioxolane et qui sont particulièrement préférées. On peut citer en outre les unités oxyalkénylène qui proviennent de l'ouverture de cycle de l'époxyhexène, du vinylglycidyl éther, de l'allylglycidyl éther, de l'acrylate de glycidyle ou du méthacrylate de glycidyle ;
- les polyphosphazènes, les polysiloxanes, les polyacrylates, les polyméthacrylates, les polyacrylamides et les polystyrènes porteurs de ramifications oligoéther ;
- les polycondensats linéaires préparés par exemple par réaction de Williamson entre des polyéthylènes glycol et du dichlorométhane. De tels polycondensats sont décrits notamment par J.R. Craven et al MaKromol. Chem. Rapid Comm., 1986, 7, 81 ;
- les réseaux de polyéthylène glycol réticulé par des isocyanates ou les réseaux obtenus, préparés à partir de polycondensats portant des groupements réticulables, tels que des doubles ou des triples liaisons, par exemple par une réaction de Williamson avec un dihalogénure insaturé tel que décrit par F. Alloin, et al., J. of Electrochem. Soc. 141, 7, 1915 (1994);
- les réseaux préparés par réaction de polyéthylène glycol modifié par des fonctions amines terminales, comme les produits commerciaux Jeffamine@, et des isocyanates,
- les polyéthylèneimines linéaires ou ramifiées ainsi que les N-alkylpolyéthylèneimines
- et leurs mélanges.

Par exemple, le polymère A est choisi parmi le poly(oxyéthylène) et les poly(méth)acrylates ayant des chaînes oligo(oxyalkylène).

Le polymère B est un polymère ayant une bonne tenue mécanique, il est caractérisé par un module de conservation $\geq$ 200 MPa, par exemple compris entre 200 et 5000 MPa ou entre 350 et 1500 MPa. Ce module de conservation est mesuré par Analyse Mécanique Dynamique (DMA) à 30°C.

Le polymère B peut, par exemple, être choisi parmi les polymères semi-cristallins dont la phase amorphe a une température de transition vitreuse basse (par exemple inférieure ou égale à 20°C) et une température de fusion haute (par exemple supérieure ou égale à 110°C) comme le PVDF (polyfluorure de vinylidène) et ses copolymères avec l'hexafluoropropène (HFP) ou le chlorotrifluoroéthylène (CTFE).

Le polymère B peut, par exemple, être choisi parmi les réseaux semi-interpénétrés à base de poly(oxyalkylène) (POE), dont la température de transition vitreuse, Tg, est inférieure ou égale à -50°C (Tg $\leq$ 223 K) et dont la température de fusion est supérieure ou égale à + 65°C.

Le polymère B peut être choisi parmi des polymères semi-cristallins ioniques comme la carboxyméthylcellulose (CMC) souvent utilisée souvent comme liant (binder) des électrodes.

Le polymère B peut également être choisi parmi les polymères amorphes ayant une température de transition vitreuse supérieure ou égale à 110°C. Comme exemples de tels polymères, on peut citer la polyvinyl pyridine, le polyindène, le polycoumarone, le polyacrylonitrile, le polyméthacrylonitrile, le poly-$\alpha$-méthylstyrène, les polycarbonates ou la PVP (polyvinyl-pyrrolidone).

Le polymère B peut également être choisi parmi les polymères dits haute performance, tels que les polyoxydes de phénylène, polysulfures de phénylène, polysulfones, polyéthersulfones, polyamide-imides, sous forme neutre ou ionique.

Le polymère B peut être un polymère à squelette perfluoré portant des groupes ioniques comme les ionomères Nafion® produits par Dupont de Nemours ou Aquivion® produits par Solvay sous forme de leurs sels.

Selon un mode de réalisation de l'invention, le polymère B est choisi parmi

- les polymères semi-cristallins ayant une phase amorphe comprise entre une température de transition vitreuse basse (par exemple inférieur ou égale à 20°C) et une température de fusion haute (par exemple supérieure ou égale à 110°C) ;
- des polymères semi-cristallins ioniques ;
- les polymères amorphes ayant une température de transition vitreuse supérieure ou égale à 110°C ;
- les polymères dits haute performance, sous forme neutre ou ionique ;
- et leurs mélanges.

Selon un mode de réalisation de l'invention, le polymère B est choisi parmi

- les fluoropolymères tels que les homopolymères et/ou copolymères de fluorure de vinylidène (PVDF), d'hexafluoropropylène (HFP), de tétrafluoroéthylène (TFE) ou de chlorotrifluoroéthylène (CTFE), lesdits fluoropolymères pouvant comprendre des groupes ioniques, comme des sulfonates, des sulfonamides ou des sulfonyl imidures, des groupes ammonium ou phosphonium ;
- les polymères semi-cristallin à base de POE, dont la température de transition vitreuse est inférieure ou égale à -50°C (Tg < 223 K) et dont la température de fusion est supérieure ou égale à + 65°C ;
- les polysulfones (PSu), comprenant des groupes ioniques ou non ;
- les polyéthersulfones (PES), comprenant des groupes ioniques ou non ;
- les polyarylréthercétones tels que le polyétheréthercétone (PEEK), comprenant des groupes ioniques ou non ;
- les polyimides (PI), fluorés ou non, comprenant des groupes ioniques ou non ;
- les polyamide-imides, comprenant des groupes ioniques ou non ;
- les polysulfures de phénylène, comprenant des groupes ioniques ou non ;
- les polyaryléthers comme le polyoxyde de phénylène, comprenant des groupes ioniques ou non ;
- les polyoléfines telles que les homopolymères et/ou copolymères d'éthylène, de propylène, de styrène, de N-vinyl-pyrrolidone, de vinyl pyridine, d'indène, de coumarone;
- les homopolymères et copolymères d'acrylonitriles (PAN) ;
- les homopolymères et copolymères de méthacrylonitriles, comme le polyméthacrylonitrile ;
- les polycarbonates, comme le polycarbonate de vinylène ;
- et leurs mélanges.

De préférence, le polymère B est choisi parmi les fluoropolymères, en particulier le polyfluorure de vinylidène (PVDF) et ses copolymères, les polysulfones (PSu), les polyéthersulfones (PES), les polyétheréthercétones (PEEK), les polyimides (PI), et leurs mélanges.

Selon un mode de réalisation de l'invention, le rapport polymère A / polymère B est compris entre 95/5 et 5/95. Par exemple, ce rapport peut être de 95/5, 80/20, 75/25, 50/50, 25/75, 20/80 ou 95/5.

La charge de renfort C comprend un matériau cellulosique. De préférence, la charge de renfort C comprend au moins une nanocellulose. Par exemple, la charge de renfort comprend au moins une nanocellulose et un matériau choisi parmi la chitine, le chitosane, la gélatine, la séricine et leurs mélanges.

La charge de renfort permet d'améliorer les propriétés mécaniques du matériau à conduction ionique et donc de diminuer l'épaisseur du film et d'améliorer la sécurité.

La nanocellulose est une cellulose ayant une nanostructure, c'est-à-dire ayant une structure dont au moins une dimension est comprise entre quelques nanomètres et 15-20 nanomètres. Il existe trois types de nanocellulose :

- la cellulose nanocristalline, aussi appelée nanowhiskers de cellulose ou nanocellulose cristalline, qui se retrouve sous la forme de nanoparticules cristallines et rigides. Ce type de nanocellulose est obtenu par hydrolyse acide de la cellulose.
- les microfibrilles de cellulose, ou nanofibrilles de cellulose, qui sont des fibres de plusieurs micromètres de longueur et ayant une largeur comprise entre 5 et 20 nanomètres. Ces fibres sont isolées à partir de la cellulose par action mécanique.
- la nanocellulose bactérienne, produite par des bactéries.

Selon un mode de réalisation de l'invention, la charge de renfort est choisie parmi la cellulose nanocristalline et les microfibrilles de cellulose.

Selon un mode de réalisation de l'invention, la charge de renfort est un mélange de deux nanocelluloses, par exemple un mélange de cellulose nanocristalline et de microfibrilles de cellulose.

Selon un mode de réalisation de l'invention, la charge de renfort est un mélange de nanocelluloses et de chitosane.

Selon un mode de réalisation de l'invention, la charge de renfort est contenue dans le matériau à conduction ionique à une concentration comprise entre 0,5 et 30% en poids, de préférence entre 2 et 20% et encore plus préférentiellement entre 5 et 15%.

Selon un mode de réalisation de l'invention, le matériau à conduction ionique comprend en outre un ou plusieurs additifs conventionnels, par exemple des charges minérales ou organiques telles que de la silice de grade batterie.

Selon un mode de réalisation de l'invention, le matériau à conduction ionique comprend en outre au moins un sel qui permet d'assurer une meilleure conductivité ionique, par exemple un sel de métal alcalin ou alcalino-terreux. De façon particulièrement préféré, il s'agit d'un sel de lithium, de préférence choisi parmi LiTFSI, LiPF$_6$, LiBF$_4$, LiAsF$_6$, LiClO$_4$ LiCF$_3$SO$_3$ et leurs mélanges. Il peut également s'agir d'un sel d'un autre métal alcalin, tel que le sodium ou d'un sel de métal alcalino-terreux tel que calcium ou magnésium. De façon particulièrement préférée, le sel est LiTFSI. Le sel est contenu dans le matériau à conduction ionique dans une quantité telle que le rapport O/M (M=métal) soit compris entre 6 et 40, de préférence entre 16 et 30. Le rapport O/M est le rapport entre la concentration en fonction éther du matériau et la concentration en sel. Le matériau à conduction ionique comprenant un sel tel que décrit ci-dessus peut être utilisé comme électrolyte solide polymère.

Selon un mode de réalisation de l'invention, le matériau à conduction ionique comprend également au moins un solvant, de préférence polaire aprotique ou un liquide ionique qui permet d'augmenter la conductivité ionique à basse température. Le solvant organique est choisi parmi les solvants typiquement utilisés dans les batteries au lithium. Il s'agit par exemple des carbonates fluorés ou non, comme l'éthylène carbonate, le propylène carbonate, le diméthyl carbonate, le diéthyl carbonate, l'éthyl méthyl carbonate, ou d'autres solvants comme le 2-méthyl THF ou le méthyl acétamide. Le liquide ionique est typiquement un sel de tétraalkylammonium tel le 1-butyl-1-methylpyrrolidiniun bis(trifluoromethane sulfonylimide).

Selon un mode de réalisation de l'invention, le matériau à conduction ionique comprend en outre au moins une charge ayant une conductivité électronique. Dans ce cas, le matériau a une conduction mixte ionique/électronique. La charge ayant une conductivité électronique peut être choisie parmi les fibres ou la poudre de carbone, le graphène, les nanotubes de carbone, le noir d'acétylène, le graphite ou un matériau graphitique, et leurs mélanges.

*FILM*

L'invention a également pour objet un film à base du matériau à conduction ionique décrit ci-dessus. Le film est une mince couche de matière comprenant les polymères A et B et la charge de renfort C. Il peut s'agir d'un simple mélange des polymères et de la charge de renfort, d'un film infiltré comprenant la charge de renfort ou d'un assemblage de plusieurs couches de films selon l'invention.

La présente invention a également pour objet l'utilisation de ce film pour empêcher la croissance dendritique dans les batteries, notamment les batteries au lithium ou au sodium.

Le film peut avoir une épaisseur comprise entre 10 et 300 μm, de préférence entre 20 et 250 μm et mieux encore entre 10 et 220 μm. Des films ayant une épaisseur comprise entre 10 et 20 μm peuvent également être obtenus. Cette épaisseur relativement faible, les bonnes propriétés mécaniques du matériau et sa conductivité ionique en font un bon électrolyte solide polymère pour générateur électrochimique, notamment pour batteries lithium polymère fonctionnant au-dessus de 25°C. Lorsque ce film contient en outre au moins un solvant ou/et un liquide ionique, ses conductivités à basse température permettent son utilisation dans les applications de l'électronique portable.

*FILM INFILTRE OBTENU PAR INFILTRATION D'UN POLYMERE POREUX*

La présente invention a également pour objet un film à base du matériau à conduction ionique décrit ci-dessus caractérisé en ce qu'il s'agit d'un film infiltré et en ce que le polymère A est infiltré dans le polymère B. Ce film est obtenu par infiltration d'un polymère poreux. Dans ce cas, le polymère B est un polymère poreux dont le polymère A rempli les pores. Il est également possible que le polymère A, en plus de remplir les pores du polymère B, forme une couche recouvrant totalement la couche de polymère poreux B.

La charge de renfort C peut être comprise dans la couche de polymère poreux B et/ou dans la couche de polymère A. Quand la charge de renfort C est contenue dans la couche de polymère A, cela permet d'augmenter sa tenue mécanique et de maintenir ce polymère dans les pores de la couche de polymère poreux B. Lorsque la tenue mécanique de A est jugée suffisante, le polymère B peut être mélangé à la charge de renfort aboutissant à un renforcement qui persiste après la température de fusion de B, si celui-ci est semi-cristallin, ou après la température de transition vitreuse de B si celui-ci est un polymère amorphe. On peut également inclure la charge de renfort C à la fois dans B et dans A, ce qui consolide sensiblement l'ensemble. La couche de polymère A peut également comprendre au moins un sel tel que décrit ci-dessus. Cela confère à l'ensemble une bonne conductivité ionique. Il est également possible d'ajouter à ce film infiltré au moins un solvant, de préférence aprotique polaire et/ou un liquide ionique.

Le polymère B est un polymère poreux, il peut être choisi parmi les polymères polymères B ci-dessus.

En particulier, le polymère B et choisi parmi les polymères semi-cristallins tels que :

- le polyéthylène,
- le polypropylène,
- les copolymères d'éthylène et de propylène,
- le polyfluorure de vinylidène homopolymère, PVDF, et ses copolymères comme les copolymères incorporant l'hexafluoropropène (HFP) et/ou le chloro trifluoroethylène, CTFE,
- le polystyrène isotactique ou syndiotactique,
- le poly-éther-cétone, PEK, et le poly-éther-éther-cétone, tel le Victrex®PEEK,
- le polysulfure de phénylène, PPS,
- et leurs mélanges ;

ou parmi les polymères amorphes à haute température de transition vitreuse, porteurs ou non de fonctions ioniques, tels que :

- les polyamide-imides,
- les polyimides, PI, fluorés ou non,
- les polysulfones, PSU,
- les polyéthersulfones, PES,
- les polyaryléthers comme le polyoxyde de phénylène, PPO
- et leurs mélanges.

Selon un mode de réalisation de l'invention, lorsque le polymère A, en plus de remplir les pores du polymère B, forme une couche recouvrant totalement la couche de polymère B, la couche de polymère B peut en outre comprendre au moins une charge ayant une conductivité électronique. La charge ayant une conductivité électronique peut être des fibres ou de la poudre de carbone, du graphène, des nanotubes de carbone, du noir d'acétylène, du graphite ou un matériau graphitique, ou leurs mélanges.

*FILM COMPRENANT PLUSIEURS COUCHES*

Il est possible de superposer différents films selon l'invention selon l'application souhaitée.

Par exemple, un film, à conductivité exclusivement ionique, peut être superposé à un film à conduction mixte ionique/électronique comme décrit précédemment. Ce type de superposition peut être utilisé dans les batteries. Dans ce cas le film à conduction ionique doit être directement en contact avec soit l'anode soit avec la cathode. Le film à conduction exclusivement ionique interrompt alors le circuit de conduction électronique, évitant une autodécharge accélérée et la mise en court-circuit de la batterie. Ce type de structure permet d'augmenter l'épaisseur entre les électrodes sans quasiment accroître la résistance interne, du fait de la conductivité électronique.

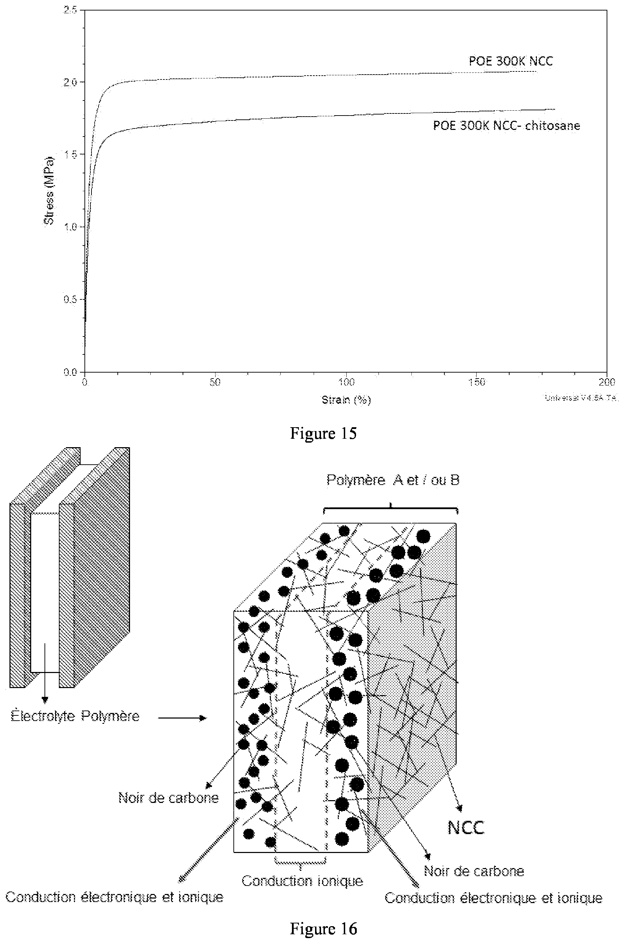

Il est également possible d'avoir une superposition de 3 couches de films, par exemple un film à conduction exclusivement ionique peut être intercalé entre 2 films à conduction mixte électronique/ionique. Dans le cas de l'utilisation dans une batterie, chacun des 2 films à conduction mixte électronique/ionique est en contact avec l'électrode négative (anode) ou positive (cathode). Un exemple de réalisation est décrit en figure 16.

*PROCEDES DE PREPARATION*

La présente invention a également pour objet trois procédés de préparation d'un film tel que décrit ci-dessus : deux procédés de préparation d'un film à base d'un simple mélange des polymères et un procédé de préparation d'un film infiltré obtenu par infiltration d'un polymère poreux.

Dans les trois procédés, il est possible d'augmenter la conductivité du système en ajoutant au moins un solvant tel que décrit ci-dessus au film obtenu. Cela permet d'augmenter la conductivité à basse température.

Voie 1 :

Le film infiltré est préparé selon la voie 1.

Ce procédé comprend les étapes suivantes :

- mise en oeuvre d'une couche de polymère poreux B, comprenant éventuellement une charge de renfort C et/ou une charge ayant une conductivité électronique ;
- infiltration du polymère A, ou du macromonomère capable de former après polymérisation le polymère A, avec éventuellement une charge de renfort C et/ou un sel et/ou un amorceur de polymérisation, dans les pores du polymère B ;
- éventuellement, polymérisation du macromonomère capable de former après polymérisation le polymère A.

La charge de renfort peut être comprise dans la couche de polymère poreux B et/ou être introduite avec le polymère A.

La couche de polymère poreux B forme un film poreux B. La couche de polymère poreux B peut être un film poreux commercial tel que Solupor®. Cette couche de polymère poreux B peut également être préparée par des techniques connues de l'homme du métier comme l'électrospinning ou l'inversion de phase (Non-solvent Induced Phase Séparation) telle que décrite dans la publication de Witte et al, Journal of membrane science 117, (1996), 1-31.

L'étape d'infiltration peut être répétée plusieurs fois en fonction du taux remplissage des pores désiré.

Lorsque l'infiltration du polymère A est telle qu'une couche de polymère A recouvre totalement le film poreux B, ce dernier peut comprendre une charge ayant une conductivité électronique telle que décrite ci-dessus. Le polymère A recouvrant totalement le polymère B, l'isolation électronique est maintenue et le film infiltré obtenu peut tout de même être utilisé comme séparateur.

Selon une première variante, l'infiltration du polymère A dans les pores du film poreux B peut être effectuée en faisant passer une solution contenant le polymère A à travers le film poreux, la solution pouvant éventuellement contenir un sel tel que décrit ci-dessus ou une charge de renfort C telle que décrite ci-dessus.

Selon une deuxième variante, l'infiltration du polymère A dans les pores du film poreux B est effectuée en infiltrant, dans les pores du film poreux B, au moins un macromonomère capable de former, après polymérisation, le polymère A, puis en induisant la polymérisation de ces macromonomères afin d'obtenir le polymère A. De préférence, le macromonomère est liquide et peu visqueux, ce qui permet d'infiltrer les macromonomères sans utiliser de solvant. Un amorceur de polymérisation est également infiltré dans les pores du film poreux, en le dissolvant dans les macromonomères. Parmi les amorceurs de polymérisation, on peut citer les photoinitiateurs ou les amorceurs à décomposition thermique, tels l'AIBN (Azo-bis isobutyronitrile) ou le PBO (péroxyde de benzoyle).

De préférence le macromonomère capable de former, après polymérisation, le polymère A, est un (méth)acrylate avec au moins une chaîne oligo(oxyalkylène).

Voie 2 :

Le film comprenant un simple mélange des polymères peut être préparé selon la voie 2.

Le procédé comprend alors les étapes suivantes :

- préparation d'un mélange de polymère A, de polymère B, de charge de renfort C, et éventuellement de sel, dans un solvant ;
- coulage de ce mélange sur un support tel que plaque de verre, de métal, ou de polymère, ou encore une électrode;
- séchage par exemple dans un four ou une étuve, possiblement sous un flux de gaz.
- éventuellement réticulation.

La réticulation permet de former un réseau tridimensionnel insoluble, ce qui améliore la tenue mécanique de la membrane. Elle peut être notamment effectuée par irradiation UV.

Le coulage du mélange directement sur l'électrode permet de ne pas retirer la membrane du support sur lequel elle a été coulée.

La vitesse de séchage peut être contrôlée afin d'éviter craquelures et tensions résiduelles dues à un séchage trop rapide.

Selon un mode de réalisation, le mélange de polymère A, de polymère B et de charge de renfort C peut comprendre un sel tel que décrit ci-dessus. Dans ce cas-là, la charge de renfort C est introduite le plus tard possible afin d'éviter son agrégation lors du contact avec le sel.

Voie 3 :

Le film comprenant un simple mélange des polymères peut être préparé selon la voie 3.

Le procédé comprend alors les étapes suivantes :

- préparation d'un mélange de polymère A, de polymère B, de charge de renfort C, et éventuellement de sel, dans un solvant ;

- lyophilisation du mélange obtenu ;
- pressage à chaud pour obtenir un film.

Le pressage à chaud permet d'obtenir un film de réseau semi-pénétré et d'amorcer la réticulation si nécessaire.
Selon un mode de réalisation, le mélange de polymère A, de polymère B et de charge de renfort C peut comprendre un sel tel que décrit ci-dessus. Dans ce cas-là, la charge de renfort C est introduite le plus tard possible afin d'éviter son agrégation lors du contact avec le sel.

*SEPARATEUR*

La présente invention a également pour objet un séparateur comprenant un matériau à conduction ionique tel que décrit ci-dessus. Par exemple, le séparateur est un film à base du matériau à conduction ionique tel que décrit ci-dessus. Il peut s'agir d'un film à base d'un simple mélange des polymères et de la charge de renfort ou d'un film infiltré comprenant une charge de renfort.
Par exemple, le séparateur est un film comprenant :

- au moins un polymère A, distinct de B, ayant une conductivité ionique comprise entre $10^{-5}$ et $10^{-3}$ S/cm,
- au moins un polymère B ayant une tenue mécanique caractérisée par un module de conservation $\geq$ 200 MPa, par exemple compris entre 200 et 5000 MPa ou entre 350 et 1500 MPa,
- au moins une charge de renfort C, comprenant au moins une nanocellulose,
- au moins un solvant, tel que décrit ci-dessus.

Typiquement, le séparateur a une épaisseur avantageusement comprise entre 10 et 200 $\mu$m.

*ELECTROLYTE SOLIDE POLYMERE*

La présente invention a également pour objet un électrolyte solide polymère comprenant un matériau à conduction ionique tel que décrit ci-dessus et au moins un sel qui permet d'assurer une meilleure conductivité ionique. Par exemple, l'électrolyte solide polymère est un film à base du matériau à conduction ionique tel que décrit ci-dessus. Il peut s'agir d'un film comprenant un simple mélange des polymères A & B et de la charge de renfort C ou d'un film infiltré.
Par exemple, l'électrolyte solide polymère est un film comprenant :

- au moins un polymère A, distinct de B, ayant une conductivité ionique comprise entre $10^{-5}$ et $10^{-3}$ S/cm,
- au moins un polymère B ayant une tenue mécanique caractérisée par un module de conservation $\geq$ 200 MPa, par exemple compris entre 200 et 5000 MPa ou entre 350 et 1500 MPa
- au moins une charge de renfort C, comprenant au moins une nanocellulose,
- au moins un sel, tel que décrit ci-dessus, qui permet d'assurer une meilleure conductivité ionique.

Typiquement, l'électrolyte solide polymère a une épaisseur comprise entre 10 et 200 $\mu$m.
Le sel qui permet d'assurer une meilleure conductivité ionique est par exemple un sel de métal alcalin ou alcalino-terreux. De façon particulièrement préféré, le sel est un sel de lithium, de préférence choisi parmi LiTFSI, LiPF$_6$, LiBF$_4$, LiAsF$_6$, LiClO$_4$ et leurs mélanges. Il peut également s'agir d'un sel d'un autre métal alcalin, tel que le sodium ou d'un sel de calcium ou de magnésium. De façon particulièrement préférée, le sel est LiTFSI.

*ELECTRODE*

La présente invention a également pour objet une électrode, par exemple une cathode, comprenant le matériau à conduction ionique tel que décrit ci-dessus.
Par exemple, le matériau à conduction ionique est utilisé comme liant d'électrode.
Selon un mode de réalisation, l'électrode comprend :

- au moins un polymère A, distinct de B, ayant une conductivité ionique comprise entre $10^{-5}$ et $10^{-3}$ S/cm,
- au moins un polymère B ayant une tenue mécanique caractérisée par un module de conservation $\geq$ 200 MPa, par exemple compris entre 200 et 5000 MPa ou entre 350 et 1500 MPa,
- au moins une charge de renfort C comprenant au moins une nanocellulose,
- au moins une charge ayant une conductivité électronique, par exemple choisi parmi les fibres ou la poudre de carbone, le graphène, les nanotubes de carbone, le noir d'acétylène, le graphite ou un matériau graphitique, et leurs mélanges,

- au moins un matériau actif tel, par exemple, que le LFP (Lithium Fer Phosphate) ou $Li_xCoO_2$ (l'oxyde de Cobalt lithié).

Ce type d'électrode est particulièrement adapté pour les batteries à électrolyte solide polymère.

*GENERATEUR ELECTROCHIMIQUE*

La présente invention a également pour objet un générateur électrochimique comprenant un matériau à conduction ionique tel que décrit ci-dessus. Selon un mode de réalisation de l'invention, le générateur électrochimique est une pile ou une batterie, par exemple une batterie au lithium, un supercondensateur ou un vitrage électrochrome.

Par exemple, le générateur électrochimique comprend un séparateur, un électrolyte solide polymère ou une électrode tels que décrits ci-dessus.

EXEMPLES :

Matériel :

Les films sont préparées en utilisant du polyfluorure de vinylidène (PVDF) ayant une masse molaire d'environ 650000 g.mol$^{-1}$, du poly(éthylène glycol) méthyl éther méthacrylate (mono-PEGMA) ayant une masse molaire d'environ 500 g.mol$^{-1}$, du poly(éthylène glycol) diméthacrylate (di-PEGMA) ayant une masse molaire d'environ 550 g.mol$^{-1}$, de poly(oxyéthylène) linéaire (POE) ayant une masse molaire d'environ 300000 g.mol$^{-1}$, et de polycondensat réticulable de POE, synthétisé à partir de polyéthylène glycol.

La charge de renfort utilisée est de la cellulose nanocristalline (NCC) ou un mélange de NCC et de chitosane. Sauf indication contraire, les pourcentages de charge de renfort sont exprimés en masse par rapport à la masse totale de polymère utilisé.

Les films sont soumis à une Analyse Mécanique Dynamique (DMA) afin de mesurer leurs propriétés mécaniques. Ces mesures sont effectuées sur un appareil Q800 de la marque TA.

**Préparation de films infiltrés à base de mono et/ou di-PEGMA (polymère A), de PVDF (polymère B) et de NCC (charge de renfort C) selon la voie 1**

Exemple 1 (exemple comparatif) : Synthèse d'un film de PVDF contenant 7% en masse de NCC

2,3 g de PVDF sont pesés dans un flacon de 40 mL et 14 mL de N,N-Diméthylformamide (DMF) sont ajoutés. Le mélange est agité à 50°C jusqu'à dissolution complète. Une dispersion de NCC à 4% dans le DMF est préparée en mélangeant 6 g de NCC dans 150 mL de DMF à l'aide d'un homogénéiseur de haute puissance de type ultra turrax. 4,4 mL de cette dispersion (soit 0,18g de NCC) sont ensuite ajoutés à la solution de PVDF et le mélange est agité vigoureusement. Le mélange est ensuite coulé sur une plaque de verre en utilisant une machine de type 'coating''doctor blade'® pour parvenir à une épaisseur de 0,8 mm. L'ensemble est ensuite immergé dans l'éthanol durant 15 min afin de créer la porosité par Non-solvent Induced Phase Séparation (NIPS, Witte et al, Journal of membrane science 117, (1996), 1-31). L'ensemble 'plaque de verre + film' est ensuite retiré du bain d'éthanol et est porté à l'étuve. Le film est séché sous vide à 60°C pendant au moins 50h puis facilement décollée à l'aide de pinces et spatule avant d'être stocké. Le film macroporeux obtenu à une épaisseur d'environ 90 microns.

Exemple 2 : Synthèse d'un film de PVDF contenant 7% en masse de NCC infiltré par du mono-PEGMA

1,0 g de mono-PEGMA et 50 mg de peroxyde de benzoyle sont pesés dans un flacon de 20 mL.

Un carré de 6x6 cm d'un film macroporeux de PVDF et contenant 7% en masse de NCC préparé selon l'exemple 1 est découpé et déposé sur un verre fritté. La préparation de mono-PEGMA est ensuite versée goutte à goutte à l'aide d'une pipette Pasteur sur l'ensemble de la surface du film et infiltrée au travers de la porosité du film grâce à un vide obtenue par une trompe à eau. Le film infiltré est ensuite portée à 80 °C durant 24h dans une étuve. Une post réticulation à 110°C pendant 2 heures et à 130°C pendant 2h est ensuite effectuée.

Exemple 3 : Synthèse d'un film de PVDF contenant 7% en masse de NCC infiltré par du di-PEGMA

Un film de PVDF contenant 7% en masse de NCC et infiltré par du di-PEGMA a été obtenu selon le mode opératoire décrit dans l'exemple 2 en utilisant 1,0 g de di-PEGMA à la place du mono-PEGMA.

Exemple 4 : Synthèse d'un film de PVDF contenant 7% en masse de NCC infiltré par un mélange de mono et di-PEGMA

Un film de PVDF contenant 7% en masse de NCC infiltré par un mélange de mono et di-PEGMA a été obtenu selon le mode opératoire décrit dans l'exemple 2 en utilisant 0,5 g de mono-PEGMA et 0,5 g de di-PEGMA à la place de 1,0 g de mono-PEGMA.

*Caractérisation du procédé d'infiltration*

Les films préparés selon les exemples 2 à 4 ont été pesés avant et après infiltration afin de quantifier le gain de masse des films. Le tableau 1 récapitule les résultats obtenus. Ces données montrent qu'il y a bien une infiltration des polymères de type PEGMA dans le film PVDF contenant 7% en masse de NCC.

Tableau 1 : Gain de masse des films

|  | PVDF NCC | | | |
|---|---|---|---|---|
|  | m initiale | m finale | m infiltrée | Gain de masse |
| Exemple 2 | 0.5589 g | 0.6841 g | 0.1252 g | 22 % |
| Exemple 3 | 0.4993 g | 0.6041 g | 0.1048 g | 21 % |
| Exemple 4 | 0.5193 g | 0.6095 g | 0.0902 g | 17% |

*Caractérisation de la morphologie des films infiltrés*

La morphologie des différents films préparés selon les exemples 1 à 4 a été caractérisée par microscopie électronique à balayage (MEB, Philips XL-30). Un échantillon de chaque film (0,5 × 0,5 mm) est fixé sur un support avec un adhésif de carbone conducteur et la superficie de l'échantillon est ensuite métallisée avec de l'or. Un voltage de 15 kV est appliqué et les images sont obtenues à différents grossissements. Les deux faces de chaque film ont été observées sans noter de différences notables.

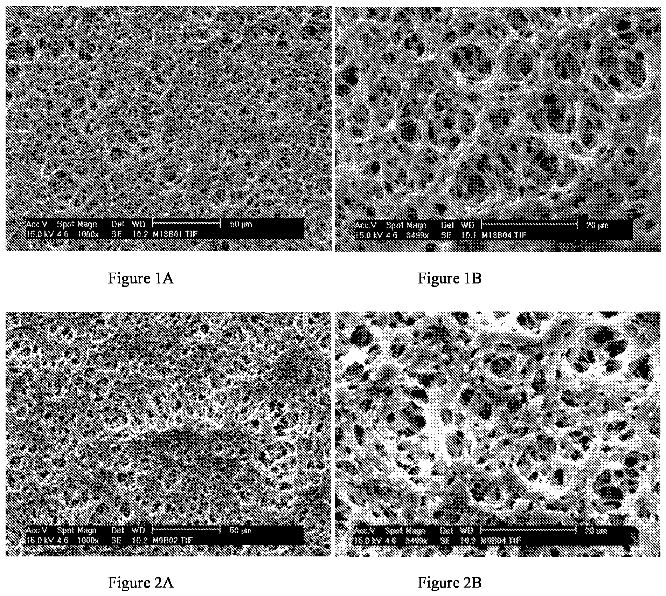

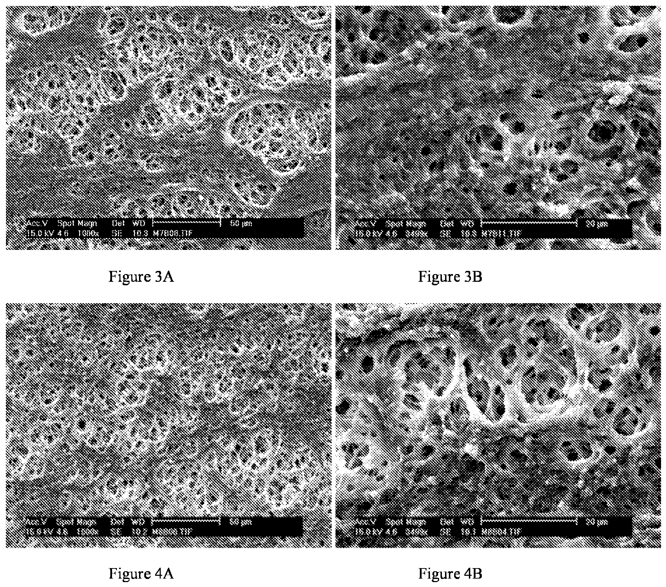

Les figures 1 à 4 représentent les images obtenues pour les différents films. Ces images montrent que les films infiltrés par le di-PEGMA et le mélange de mono et di-PEGMA présentent une porosité inférieure à celle du film infiltré par le mono-PEGMA. L'ensemble des films infiltrés est moins poreux que le film original de PVDF macroporeux renforcée par 7% de NCC. Cela atteste que le procédé d'infiltration est efficace.

*Caractérisation mécanique par DMA*

Les films préparés selon les exemples 1 à 4 sont caractérisés entre -100°C et +180°C. Les échantillons sont des films rectangulaires ayant les dimensions voisines de 14 mm x 6,5 mm × 0,1 mm (L × l × e). Les échantillons sont refroidis jusqu'à -100°C puis les films sont chauffés à une vitesse de 2 °C/min jusqu'à 180°C en subissant une déformation de 0.05% à une fréquence de 1 Hz.

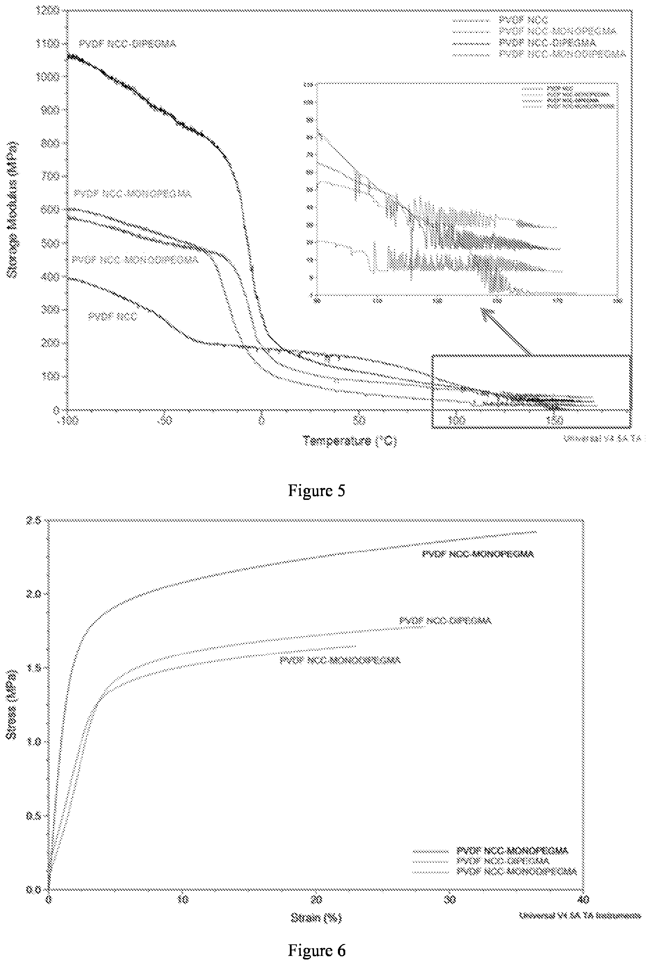

La figure 5 représente la variation de la valeur du module de conservation en fonction de la température pour ces quatre films.

Ces courbes montrent qu'à basse température, l'infiltration des films par les différents PEGMA contribue à augmenter la valeur du module de conservation (Storage Modulus) : + 50% à -100°C pour le film infiltré par du mono-PEGMA selon l'exemple 2 et pour le film infiltré par un mélange de mono et di-PEGMA selon l'exemple 4. Concernant le film infiltré par du di-PEGMA selon l'exemple 3, le module de conservation est presque triplé à -100°C.

Le zoom montre qu'au-delà de 120 à 130°C la tenue mécanique des films infiltrés selon les exemples 2 à 4 est considérablement améliorée par rapport au film non infiltré selon l'exemple 1. Cela est un gage de sécurité en cas de dysfonctionnement fortement exothermique de la batterie.

*Caractérisation mécanique par essai de traction*

Les films selon les exemples 2 à 4 ont ensuite été caractérisés en réalisant des essais de traction à 30 °C avec une vitesse d'étirage de 0,1 N/min. Les échantillons sont des films rectangulaires ayant les dimensions voisines de 12 mm × 6 mm × 0,1 mm.

La figure 6 représente les courbes obtenues. Les résultats sont comparables à ceux obtenus avec des films de PVDF renforcées par la NCC non infiltrées tel que décrit dans l'exemple 1.

*Mesures de conductivité*

Les mesures sont effectuées avec un impédancemètre Solartron 1287-1260, couplé à un ordinateur pour le traitement des données, dans la gamme de fréquence 0,1 Hz-10 MHz, l'amplitude du signal sinusoïdal est fixée à +/- 100mV.

Les échantillons de films infiltrés selon les exemples 2 à 4 sont immergés durant 25 min dans une solution de Lithium hexafluorophosphate (LP 30 de Sigma Aldrich, mélange d'éthylène carbonate et de diméthyle carbonate-EC/DMC=50/50 (v/v) - avec 1,0 M de LiPF6) puis sont montés dans des cellules Swagelok.

Chaque mesure a été réalisée deux fois pour s'assurer de la reproductibilité des conductivités déterminées. Les valeurs de conductivités obtenues à 25°C sont résumées dans le tableau 2.

Tableau 2 : mesures de conductivité

|  | $\sigma$ (mS/cm) |
|---|---|
| Exemple 2 | 6,7 |
| Exemple 3 | 2,9 |
| Exemple 4 | 3,4 |

Typiquement, un film macroporeux de PVDF renforcée avec 6% de NCC présente une conductivité de 2,5 mS/cm à 25°C après avoir été submergée dans du LP30. Ces résultats montrent que les films infiltrés présentent une meilleure conductivité.

**Préparation de films renforcés selon la voie 2**

Les films contiennent une quantité de sel LiTFSI ($(CF_3SO_2)_2NLi$) telle que le rapport O/Li est de 25.

*Préparation de films renforcés à base de POE (polymère A), de PVDF (polymère B) et de NCC (charge de renfort C).*

Exemple 5 : synthèse d'un film POE/PVDF (50/50) avec 7% de NCC

1,0 g de POE, 1,0 g de PVDF et 0,26 g de LiTFSI sont pesés dans un flacon de 60 mL et 20 mL de DMF sont ajoutés. Le mélange est agité à 60°C jusqu'à dissolution complète. Une dispersion de NCC à 4% dans le DMF est préparée en mélangeant 6 g de NCC dans 150 mL de DMF à l'aide d'un homogénéiseur de haute puissance de type ultra turrax. 3,77 mL de cette dispersion (soit 0,15 g de NCC) sont ensuite ajoutés à la solution de polymères et le mélange est agité vigoureusement à 70°C à l'aide d'un agitateur mécanique pendant une dizaine de minutes puis dégazé, pour éviter la formation de bulles, à l'aide d'une pompe.

Le mélange est ensuite coulé avec une machine de type 'coating' et un docteur blade pour parvenir à une épaisseur de 1,5 mm sur une plaque de verre. L'ensemble 'plaque de verre + film' est alors porté à l'étuve. Les films sont séchés sous vide à 60°C pendant au moins 50h puis délicatement décollées à l'aide de pinces et spatule avant d'être stockés. Un contrôle de l'élimination totale de la DMF est réalisé par spectroscopie Infrarouge. Le film obtenu a une épaisseur d'environ 200 $\mu$m. Cette épaisseur permet des mesures mécaniques fiables.

Exemple 6: synthèse d'un film POE/PVDF (80/20) contenant 7% de NCC

Un film POE/PVDF 80/20 a été obtenu selon le mode opératoire décrit dans l'exemple 5 en utilisant 1,6 g de POE, 0,4 g de PVDF, 0,42 g de LiTFSI et 21 mL de DMF.

Exemple 7 : synthèse d'un film POE/PVDF (90/10) contenant 7% de NCC

Un film POE/PVDF 90/10 a été obtenu selon le mode opératoire décrit dans l'exemple 5 en utilisant 1,8 g de POE, 0,2 g de PVDF, 0,47 g de LiTFSI et 22 mL de DMF.

Exemple 8 (exemple comparatif) : synthèse d'un film POE/PVDF (80/20) contenant 0% de NCC

Un film POE/PVDF 80/20 a été obtenu selon le mode opératoire décrit dans l'exemple 6 en n'utilisant pas de NCC.

Exemple 9 (exemple comparatif) : synthèse d'un film POE/PVDF (90/10) contenant 0% de NCC

Un film POE/PVDF 90/10 a été obtenu selon le mode opératoire décrit dans l'exemple 7 en n'utilisant pas de NCC.

*Caractérisation thermique*

La dégradation thermique des films selon les exemples 6 à 9 a été mesurée par analyse thermogravimétrique avec un Perkin Elmer Pyris 1 TGA sous atmosphère oxydante (air). La perte de masse d'un échantillon de 10 mg a été enregistrée depuis la température ambiante jusqu'à 450 °C avec une vitesse de chauffe de 10 °C/min.

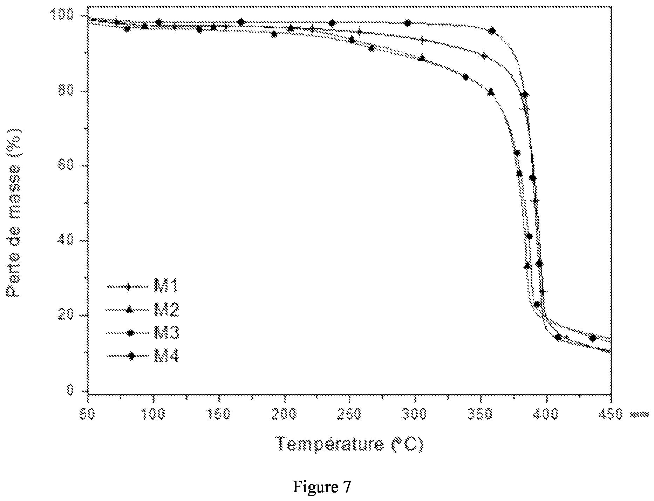

La figure 7 représente les résultats obtenus. Ces résultats montrent que :

- les films contenant 20 % de PVDF (M2 et M3) initient une première perte de masse autour de 200 °C qui est très légèrement moins prononcée en présence de cellulose (M2). Pour ces films une seconde perte de masse est observée autour de 400 °C ;
- les films contenant 10 % de PVDF (M1 et M4) initient une brusque et forte perte de masse autour de 400 °C ;
- à partir de 400 °C les films contenant 20 % de PVDF (M2 et M3) expérimentent une perte de masse moins importante et plus graduelle que les membranes contenant 10 % de PVDF (M1 et M4).

Les films selon les exemples 6 à 9 ont une stabilité thermique jusqu'à 200°C, ce qui est bien supérieur au maxima de température dans les batteries (environ 100°C).

*Caractérisation calorimétrique*

L'analyse calorimétrique des films selon les exemples 6 à 9 a été réalisée avec un DSC Mettler Toledo 822 sous atmosphère d'azote. Le flux de chaleur d'un échantillon de 10 mg a été enregistré durant une rampe de refroidissement et de chauffe à la vitesse de 10 °c/min entre -70 °C et 200 °C.
Les paramètres calorimétriques sont résumés dans le tableau 3.

Tableau 3 : mesures calorimétriques

| | refroidissement | | | chauffage | |
|---|---|---|---|---|---|
| | cristallisation POE | cristallisation PVDF | | fusion POE | fusion PVDF |
| | Tmax (°C)/ $\Delta$Hc (J/g) | Tmax (°C)/ $\Delta$Hc (J/g) | Tg (°C) | Tmax (°C)/ $\Delta$Hf (J/g) | Tmax (°C)/ $\Delta$Hf (J/g) |
| NCC-POE/PVDF (90/10) | 26/59.9 | 102/4.3 | -33.9 | 56/62.9 | 147-155/1.2 |
| NCC-POE/PVDF (80/20) | 21/50.8 | 114/8.1 | -33.8 | 55/55.2 | 152/4.9 |
| POE/PVDF (80/20) | 26/53.9 | 111-119/8.1 | -35.7 | 51/57.7 | 150/3.9 |
| POE/PVDF (90/10) | 24/63.5 | 105/3.4 | -35.5 | 53/67.6 | 149-156/1.6 |

A partir de cette analyse on peut observer :

- L'addition de la NCC entraine une très légère diminution de la Tg indépendamment du pourcentage de PVDF, qui se situe dans la marge d'incertitude des mesures,
- l'addition de la NCC modifie légèrement la cristallisation et la fusion du PVDF et du POE bien qu'aucune tendance ne puisse être discernée entre les différents échantillons.

*Caractérisation de la morphologie des films obtenus*

La morphologie des films selon les exemples 6 à 9 a été caractérisée par microscopie électronique à balayage (MEB, Philips XL-30). Un échantillon de chaque film (0,5x0,5 mm) est fixé sur un support avec un adhésif de carbone conducteur et la superficie de l'échantillon est ensuite métallisée avec de l'or. Un voltage de 15 ou 5 kV est appliqué et les images sont obtenues à différents grossissement. Les deux faces de chaque membrane ont été observées sans noter de différences notables.

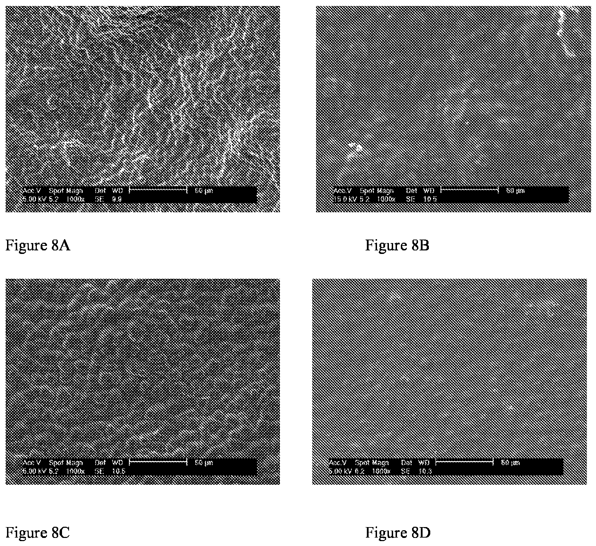

La figure 8 représente les photos obtenues. On peut observer visuellement que tous les films ont une morphologie « granuleuse ». Les nodules de PVDF au sein du POE attestent de la séparation de phase entre le PVDF et le POE. Les deux phases sont continues, elles constituent deux structures tridimensionnelles imbriquées l'une dans l'autre. Les membranes contenant 20% de PVDF (M2 et M3) présentent des domaines de PVDF beaucoup plus définis. Il n'est pas possible d'établir de différences morphologiques significatives lorsque l'on incorpore la NCC.

*Caractérisation mécanique par essais de traction*

Les films ont été caractérisés avec le DMA TA Q800 en réalisant des essais de traction à 30 °C avec une vitesse d'étirage de 0,1 N/min. Les échantillons sont des films rectangulaires ayant les dimensions voisines de 12*6*0,1 mm.

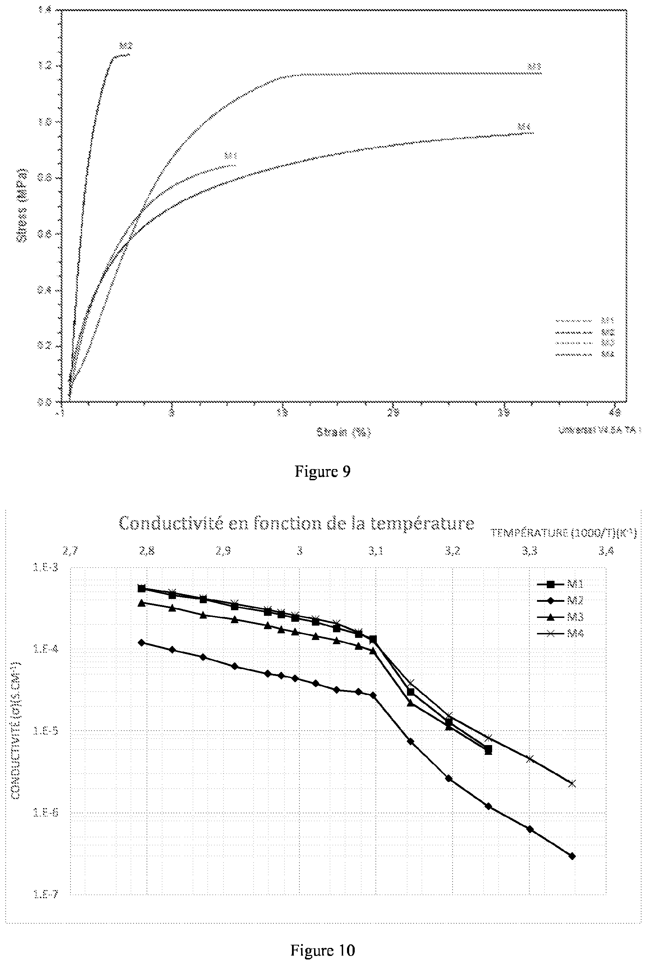

La figure 9 représente les résultats obtenus. A partir de cette analyse on peut observer que l'addition de NCC contribue à modifier les propriétés mécaniques. Indépendamment du pourcentage de PVDF, la NCC entraine une augmentation du module d'Young et une diminution de la déformation à la rupture. Un pourcentage plus important de PVDF améliore la tenue mécanique.

*Mesures de conductivités*

Les films selon les exemples 6 à 9 ont été synthétisés en ajoutant un sel de lithium (LiTFSI). La concentration molaire en sel de lithium, exprimée en nombre d'atomes d'oxygène (O) du polymère POE par rapport au nombre de cation lithium (Li$^+$) du sel de lithium, est de O/Li = 25 dans les quatre cas. Cette concentration est habituelle dans la littérature car elle permet d'obtenir de bonnes performances en fonctionnement. Les films ainsi obtenus ont été caractérisés en cellules symétriques, c'est-à-dire entre deux électrodes identiques de lithium métallique. L'assemblage des cellules a été effectué en boite à gants sous atmosphère d'argon (humidité inférieure à 5 ppm, oxygène inférieur à 5 ppm) afin de ne pas dégrader le lithium et de ne pas ré-humidifier les films. Les assemblages sont ensuite scellés dans des pochettes en aluminium plastifié pour rester étanche à l'air ambiant, et installés dans une enceinte thermostatée pour procéder aux mesures de conductivité à différentes températures.

La mesure de conductivité est effectuée par spectroscopie d'impédance électrochimique, sur un potentiostat VMP-300 de la marque BioLogic. Les mesures se font lors de la descente en température (entre 84°C, soit 1000/T = 2,8 ; et 21°C, soit 1000/T = 3,4). Si la cellule ne conduit plus en dessous d'une certaine température, aucune mesure n'est relevée.

La spectroscopie d'impédance électrochimique est effectuée après stabilisation de la température et de la valeur de résistance d'électrolyte de la membrane. Un balayage en fréquence entre 1MHz et 1Hz avec une amplitude de potentiel adaptée à l'échantillon (entre 30 et 100 mV) est réalisé. La représentation de la valeur de courant sur un graphe de Nyquist permet de déterminer la valeur de la résistance d'électrolyte (l'électrolyte étant dans notre cas le film), ce qui permet ensuite de calculer la conductivité de l'échantillon avec la formule suivante :

$$\sigma = \frac{e}{R \times S}$$

Avec $\sigma$ la conductivité de la cellule exprimée en S.cm$^{-1}$, $e$ l'épaisseur de l'électrolyte (en cm), R la résistance de l'électrolyte (mesurée par la spectroscopie d'impédance électrochimique, exprimée en Ohm), et S la surface de l'échantillon en cm$^2$

La figure 10 représente les résultats obtenus.

Nous pouvons observer que dans le cas des films selon les exemples 6 et 8, contenant chacune 20% de PVDF, les valeurs de conductivité mesurées sont inférieures à celles des films selon les exemples 7 et 9 qui ne contiennent que 10% de PVDF.

De plus pour les membranes contenant 20% de PVDF, l'ajout de 7% de NCC provoque une chute des valeurs de conductivité, d'un facteur 3 à 85°C.

En revanche pour les films selon les exemples 7 et 9 contenant 10% de PVDF, l'ajout de 7% de NCC (film selon l'exemple 7) ne provoque pas de diminution notable de la conductivité. On renforce donc le film sans affecter la conductivité avec un taux de PVDF de 10% ;

Les valeurs de conductivité diminuent légèrement jusqu'à 1000/T = 3,1 soit T = 50°C, valeur à laquelle le POE de la membrane cristallise. Cette valeur est comprise entre les valeurs mesurées en DSC en chauffage et en refroidissement car nous laissons ici le temps au POE de cristalliser, tandis que la DSC était réalisée dans un régime dynamique (10°C/min).

En dessous de 50°C, les valeurs de conductivité chutent plus rapidement car l'électrolyte est alors solide.

*Préparation de films renforcés à base de de polycondensat réticulable de POE (PC) (polymère A), POE polymère B) et de NCC (charge de renfort C).*

Exemple 10 : Synthèse du polycondensat réticulable de POE (PC1000)

Dans un réacteur, 30 g (30 mmol) de polyéthylèneglycol 1000 (PEG1000) sont mélangés avec 4,9 g (120 mmol) de NaOH. Le mélange est agité à l'aide d'un agitateur mécanique pendant 3 heures à 65°C. La température est baissée à 50°C puis 3,48 mL (29,4 mmol) de 3-chloro-2-chloroprop-1-ène sont ajoutés goutte à goutte. L'agitation est poursuivie pendant 24 heures à 50°C et une pâte est obtenue.

De l'eau est ajoutée pour solubiliser le polymère puis la solution est transvasée dans un erlenmeyer et diluée avec de l'eau jusqu'à 600 mL. De l'acide acétique est ajouté progressivement jusqu'à ce que la solution ait un pH de 7 (contrôle avec papier pH). Le produit est purifié par ultrafiltration avec un seuil de coupure de 3000 g.mol$^{-1}$ afin d'enlever les oligomères, le sel $CH_3COONa$ formé et l'excès de NaOH. Lorsque la conductivité du filtrat est proche de celle de l'eau déionisée (10 $\mu$S.cm$^{-1}$) l'ultrafiltration est finie.

Le solide est lyophilisé et le produit est obtenu sous la forme d'un solide blanc.

Exemple 11 : synthèse d'un film POE/NPC1000 (50/50) contenant 10% de NCC

Dans un flacon de 30 ml on dissout, dans 10 ml d'eau distillée 0,20 g de POE, 0,11 g de LiTFSI et 0,20 g de PC1000 obtenu selon l'exemple 10. Ensuite sont ajoutés 0,0040 g de photoinitiateur Irgacure 2959 et enfin 1mL de dispersion de NCC à 4% dans de l'eau. Le mélange est agité pendant 12 heures. Les bulles d'air sont enlevées à l'aide d'une pompe et la solution est coulée dans une boite de pétri de diamètre 9 cm. Lorsque le solvant est évaporé le film est réticulé sous UV en l'exposant sous la lampe pendant une minute (2 x 30 secondes) avec une minute d'attente entre la première et la deuxième exposition aux UV. A l'issue de la réticulation PC1000 se transforme un réseau tridimensionnel NPC 1000 et forme avec l'homopolymère POE un réseau semi-interpénétré POE/NPC1000. Dans les exemples suivants de 12 à 21 inclus, ces réseaux semi-interpénétrés se forment à l'issue de la réticulation UV.

Les films sont séchés sous vide à 70°C pendant au moins 72h et stockés dans la boite à gants.

Exemple 12 : synthèse d'un film POE/NPC1000 (75/25) contenant 10% de NCC

Un film POE/NPC1000 (75/25) contenant 10% de NCC a été obtenu selon le mode opératoire décrit dans l'exemple 11 en utilisant 0,30 g de POE, 0,10 g de PC 1000 et 0,0020 g de Iragcure 2959.

Exemple 13 : synthèse d'un film POE/NPC1000 (25/75) contenant 10% de NCC

Un film POE/NPC1000 (25/75) contenant 10% de NCC a été obtenu selon le mode opératoire décrit dans l'exemple 11 en utilisant 0,10 g de POE, 0,30 g de PC 1000 et 0,0060 g de Iragcure 2959.

Exemple 14 : synthèse d'un film POE/NPC1000 (75/25) contenant 6% de NCC

Un film POE/NPC1000 (75/25) contenant 6% de NCC est obtenu selon le mode opératoire décrit dans l'exemple 12 en utilisant 6 mL de dispersion à 4% de NCC, soit 0,024 g de NCC.

Exemple 15 : synthèse d'un film POE/NPC1000 (75/25) contenant 12% de NCC

Un film POE/NPC1000 (75/25) contenant 12% de NCC est obtenu selon le mode opératoire décrit dans l'exemple 12 en utilisant 0,048 g de NCC.

Exemple 16 (exemple comparatif) : synthèse d'un film POE/NPC1000 (75/25) avec 0% de NCC

Un film POE/NPC1000 (75/25) sans NCC est obtenu selon le mode opératoire décrit dans l'exemple 12 en n'utilisant pas de NCC.

Exemple 17 : synthèse d'un film POE/NPC1000 (50/50) contenant 6% NCC

Un film POE/NPC1000 (50/50) contenant 6% NCC est obtenu selon le mode opératoire décrit dans l'exemple 11 en utilisant 0,024 g de NCC.

Exemple 18 : synthèse d'un film POE/NPC1000 (25/75) contenant 6% NCC

Un film POE/NPC1000 (25/75) contenant 6% NCC est obtenu selon le mode opératoire décrit dans l'exemple 13 en utilisant 0,024 g de NCC.

Exemple 19 : synthèse d'un film POE/NPC1000 (25/75) contenant 12% NCC

Un film POE/NPC1000 (25/75) contenant 12% NCC est obtenu selon le mode opératoire décrit dans l'exemple 13 en utilisant 0,048g de NCC.

Exemple 20 (exemple comparatif) : synthèse d'un film POE/NPC1000 (50/50) avec 0% NCC

Un film POE/NPC1000 (50/50) sans NCC est obtenu selon le mode opératoire décrit dans l'exemple 11 en utilisant pas de NCC.

Exemple 21 : synthèse d'un film POE/NPC1000 (50/50) contenant 12% NCC

Un film POE/PC1000 (50/50) contenant 12% NCC est obtenu selon le mode opératoire décrit dans l'exemple 11 en utilisant 0,048 g de NCC.

*Caractérisation mécanique par DMA*

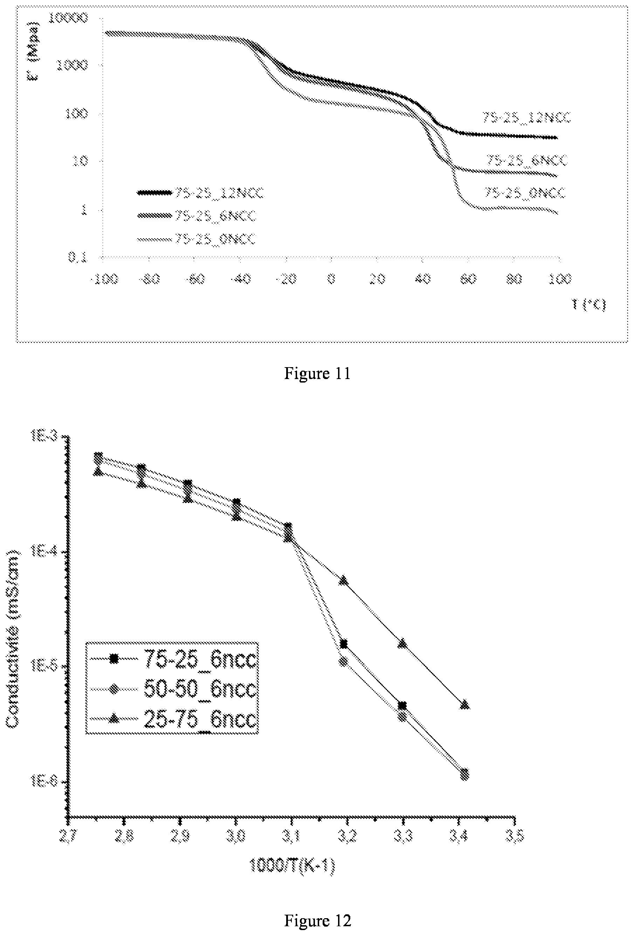

Les films selon les exemples 14, 15 et 16 sont caractérisés entre -100°C et +100°C. Les échantillons sont des films rectangulaires ayant les dimensions voisines de 15 mm x 6 mm $\times$ 0,150 mm (L $\times$ l $\times$ e). Les échantillons sont refroidis jusqu'à -100°C puis les films sont chauffés à une vitesse de 3°C/minute jusqu'à 100°C en subissant une déformation de 0,05% à une fréquence de 1Hz.
Les résultats obtenus sont présentés en figure 11. Ces résultats montrent que les films ont une valeur de module de conservation E' de 6000 MPa à -100°C. A la température de transition vitreuse, toutes les films voient leur module de conservation chuter : jusqu'à 100 MPa pour le film non renforcé selon l'exemple 16, et jusqu'à 300 MPa pour les deux films renforcés. Il est à noter qu'à ce stade, où les polymères ne sont pas encore fondus, peu de différences sont notables entre l'échantillon contenant 6% (film selon l'exemple 14) et celui contenant 12% de NCC (film selon l'exemple 15). A la température de fusion du POE, soit 43°C, les modules de conservation chutent à nouveau : Jusqu'à 1 MPa pour le film non renforcé, et 8 Mpa pour le film renforcé à l'aide de 6% de NCC, et 70 MPa pour le film contenant 12% de NCC.
Le renfort apporté par les NCC est donc respectivement de 8 fois pour le film à 6% (film selon l'exemple 14) et de 70 fois pour le film à 12% (film selon l'exemple 15).

*Mesures de conductivités.*

Les mesures de conductivité sont effectuées avec un impédancemètre Hewlett Packard 4192A, couplé à un ordinateur pour le traitement des données, dans la gamme de fréquence 5 Hz-13 MHz, l'amplitude du signal sinusoïdal est fixée à +/-10 mV. Les échantillons sont montés en boîte à gant sous argon dans des cellules Swagelok.
Des mesures de conductivité ont été effectuées sur des films selon les exemples 14, 17 et 18 afin d'étudier l'effet du ratio polymère A/polymère B sur la conductivité. Les mesures sont effectuées en montée et en descente en température de 20°C à 90°C. La mesure est effectuée tous les 10°C après une stabilisation en température de 1 heure. Les conductivités ont été prises au moment de la descente en température. Chaque mesure a été réalisée deux fois pour s'assurer de la reproductibilité des conductivités déterminées.
La figure 12 représente les résultats obtenus. Les mesures de conductivité sont similaires à hautes températures pour les trois échantillons, avec une conductivité à 90°C (1000/T = 2,75) comprise entre 5 et 7 mS/cm.
La conductivité à une température inférieure à la température de fusion du POE (43°C) chute pour les échantillons contenant la plus grande proportion de POE, mais se maintient à un niveau plus élevé pour l'échantillon contenant seulement 25% en masse de POE. Cela est dû principalement au NPC1000 qui empêche la formation de cristallites de POE.

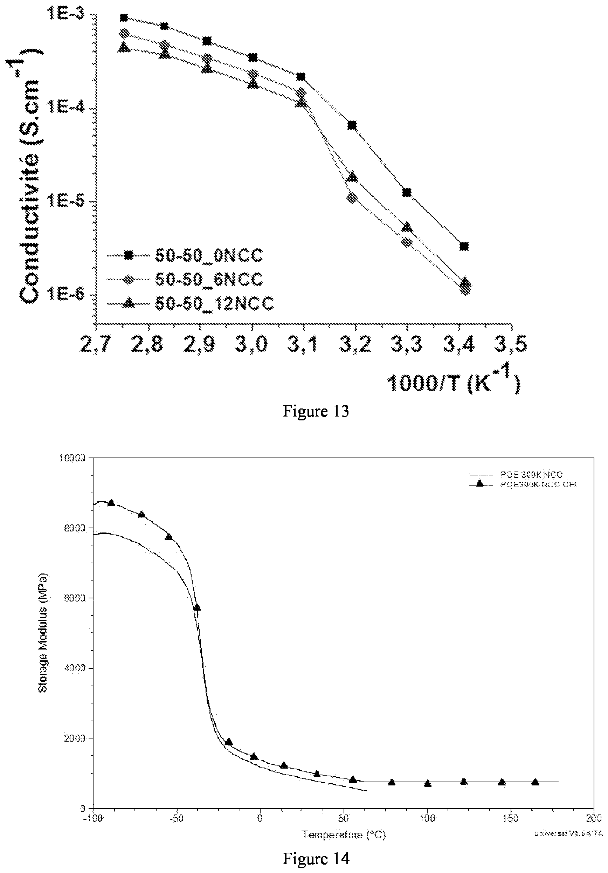

Des mesures de conductivité ont également été effectuées sur des films selon les exemples 17, 20 et 21 afin d'étudier l'effet de la quantité de NCC sur la conductivité. La figure 13 représente les résultats obtenus. Ces résultats montrent que l'introduction de charges de renfort a pour conséquence la diminution de la conductivité des échantillons. Par exemple, à 1000/T = 2,75 soit T=90°C, qui est représentatif de la température d'utilisation des électrolytes solides, le film non renforcé selon l'exemple 20 a une conductivité de $1.10^{-3}$ mS/cm, celui contenant 6% en masse de NCC (exemple 17) a une conductivité de $7.10^{-4}$ mS/cm et celui contenant 12% en masse de NCC (exemple 21) a une conductivité de $4,5.10^{-4}$ mS/cm. Il y a donc une diminution de performance d'un facteur 1,5 pour l'échantillon à 6% et d'un facteur 2 pour l'échantillon contenant 12% de NCC. Cependant, ces pertes de performance électrochimique restent limitées en comparaison du renfort mécanique gagné par les films renforcés.

*Mesures de croissance dendritique*

Les mesures de croissance dendritique sont effectuées avec un potentiostat VMP300 de marque BioLogic, couplé à un ordinateur pour le traitement des données.

Un morceau de film est assemblé entre deux électrodes en lithium métallique, par laminage à chaud. Un courant continu de faible intensité (2mA) est imposé aux bornes de l'échantillon afin de provoquer la migration d'ions lithium d'une électrode à l'autre. La valeur de la tension est mesurée en continu. Elle doit rester stable en l'absence de dendrite car elle correspond alors à la différence de potentiel entre les deux électrodes. Lorsqu'une dendrite perce le film, des pics de tension sont observés, résultant du court-circuit provoqué par la mise en contact des deux électrodes par la dendrite..

Dans le cas d'un film non renforcé selon l'exemple 20, les premières dendrites sont observées après 5h de fonctionnement.

La même expérience est menée sur des films renforcés selon l'invention jusqu'à l'épuisement de l'électrode de lithium positive, qui s'est entièrement vidée dans l'électrode négative. Les résultats sont présentés dans le tableau 4.

Tableau 3 : mesures de croissance dendritique sur les films renforcés selon l'invention

| Echantillon | Temps avant vidage de l'électrode positive | Apparition de dendrites |
|---|---|---|
| Exemple 14 | 25h | Non |
| Exemple 15 | 20h | Non |
| Exemple 17 | 22h | Non |
| Exemple 18 | 19h | Non |
| Exemple 19 | 19h | Non |

La durée avant la consommation complète de l'électrode positive varie car les films n'ont pas tous la même épaisseur, ralentissant le transport du lithium. Cependant, ces résultats montrent que tous les films selon l'invention empêchent la croissance dendritique, même après près de 20 heures d'utilisation.

**Préparation de films renforcés à base de polycondensat réticulable de POE (PC) (polymère A), de POE (polymère B) et de NCC ou NCC/chitosane (charge de renfort C) selon la voie 3**

Exemple 22 : Synthèse d'un film de POE/NPC1000 (80/20) contenant 10% de NCC et 1,33% de chitosane.

Dans un flacon de 60ml, on dissous 1,20 g de POE et 0,3 g de PC1000 selon l'exemple 10 dans 43,8 mL d'eau distillée puis 0,39 g de LiTFSI et 0,02 g de chitosane sont ajoutés. Une dispersion de NCC à 2,3% dans de l'eau distillée est préparée en mélangeant 2,56 g de NCC dans 110 mL d'eau distillée à l'aide d'un homogénéiseur de haute puissance de type ultra turrax. 6,9 mL de cette dispersion (soit 0,16 g de NCC) sont ensuite ajoutés et le mélange est agité vigoureusement. Puis, 0,15 mg de 4,4'-azobis(4-cyanovaleric acid), un amorceur de polymérisation, sont ajoutés et la préparation est versée dans un tube cylindrique et congelée avec de l'azote liquide et finalement l'eau est éliminée par lyophilisation. Les échantillons sont alors pressés à chaud (entre 80 et 90°C) pour déclencher la réticulation par voie radicalaire et obtenir des films de réseau semi-interpénétré ($\approx$ 300 μm d'épaisseur).

Exemple 23 : Synthèse d'un film de POE/NPC 1000(80/20) contenant 10% de NCC

Dans un flacon de 60ml, on dissous 1,23 g de POE et 0,3 g de PC1000 selon l'exemple 10 dans 44,1 mL d'eau distillée puis 0,40 g de LiTFSI sont ajoutés. Une dispersion de NCC à 2,3% dans de l'eau distillée est préparée en mélangeant 2,56 g de NCC dans 110 mL d'eau distillée à l'aide d'un homogénéiseur de haute puissance de type ultra turrax. 7,4 mL de cette dispersion (soit 0,17 g de NCC) sont ensuite ajoutés et le mélange est agité vigoureusement. Puis, 0,15 mg de 4,4'-azobis(4-cyanovaleric acid), un amorceur de polymérisation, sont ajoutés et la préparation est versée dans un tube cylindrique et congelée avec de l'azote liquide et finalement l'eau est éliminée par lyophilisation. Les échantillons sont alors pressés à chaud (entre 80 et 90°C) pour déclencher la réticulation par voie radicalaire et obtenir des films de réseau semi-interpénétré ($\approx$ 300 $\mu$m d'épaisseur).

*Caractérisation mécanique par DMA*

Les membranes sont caractérisées entre -100°C et +180°C à l'aide d'une DMA TA Q800. Les échantillons sont des films rectangulaires ayant les dimensions voisines de 10*5,0*0,3 (L*l*e en mm). Les échantillons sont refroidis jusqu'à -100°C puis les films sont chauffés à une vitesse de 2 °C/min jusqu'à 180°C en subissant une déformation de 0,05% à une fréquence de 1Hz.

La figure 14 représente les résultats obtenus. L'addition de chitosane entraine une augmentation du module de conservation à basse température d'environ 1000 MPa mais ne retarde pas la température à laquelle la première chute de module a lieu. L'addition du chitosane permet également de maintenir un module de conservation de plus de 500 MPa sur plus de 50° C supplémentaires.

*Caractérisation par essais de traction*

Les membranes ont été caractérisées avec le DMA TA Q800 en réalisant des essais de traction à 30 °C avec une vitesse d'étirage de 0,1 N/min. Les échantillons sont des films rectangulaires ayant les dimensions voisines de 10*5,0*0,3 mm.

L'addition de chitosane entraine une légère augmentation de la déformation à la rupture. Le module d'Young n'est pas modifié mais la déformation plastique semble plus importante (pente sensiblement plus grande).

## Revendications

1. Matériau à conduction ionique pour générateur électrochimique **caractérisé en ce qu'**il comprend :

   - 1. au moins un polymère A, distinct de B, ayant une conductivité ionique comprise entre $10^{-5}$ et $10^{-3}$ S/cm, la conductivité ionique étant mesurée par spectrométrie d'impédance électrochimique à 25 °C
   - 2. au moins un polymère B ayant une tenue mécanique **caractérisée par** un module de conservation $\geq$ 200 MPa, par exemple compris entre 200 et 5000 MPa ou entre 350 et 1500 MPa, le module de conservation étant mesuré par Analyse Mécanique Dynamique à 30°C,
   - 3. au moins une charge de renfort C.

2. Matériau à conduction ionique selon la revendication 1 **caractérisé en ce que** le polymère B est choisi parmi les polymères suivants :

   - les polymères semi-cristallins ayant une phase amorphe comprise entre une température de transition vitreuse basse (par exemple inférieure ou égale à 20°C) et une température de fusion haute (par exemple supérieure ou égale à 110°C) ;
   - des polymères semi-cristallins ioniques ;
   - les polymères amorphes ayant une température de transition vitreuse supérieure ou égale à 110°C ;
   - les polymères dits haute performance, sous forme neutre ou ionique ;
   - et leurs mélanges.

3. Matériau à conduction ionique selon l'une des revendications 1 ou 2 **caractérisé en ce que** le polymère A est choisi parmi les polymères comprenant une chaine oxyalkylène dans la chaine principale ou dans une chaine pendante.

4. Matériau à conduction ionique selon l'une quelconque des revendications précédentes **caractérisé en ce que** la charge de renfort C comprend au moins une nanocellulose, par exemple, la charge de renfort C comprend au moins une nanocellulose et un matériau choisi parmi la chitine, le chitosane, la gélatine, la séricine et leurs mélanges.

5. Matériau à conduction ionique selon l'une quelconque des revendications précédentes **caractérisé en ce qu'**il comprend en outre au moins un sel de métal alcalin ou alcalino-terreux, de préférence un sel de lithium, encore plus préférentiellement un sel de lithium choisi parmi LiTFSI, LiPF$_6$, LiBF$_4$, LiAsF$_6$ et LiClO$_4$, LiCF$_3$SO$_3$ et leurs mélanges.

**6.** Film **caractérisé en ce qu'**il comprend un matériau à conduction ionique selon l'une quelconque des revendications précédentes.

**7.** Film selon la revendication 6 **caractérisé en ce qu'**il s'agit d'un film infiltré et **en ce que** le polymère A est infiltré dans le polymère B.

**8.** Séparateur pour générateur électrochimique **caractérisé en ce qu'**il comprend un matériau à conduction ionique selon l'une des revendications 1 à 5.

**9.** Electrolyte polymère pour générateur électrochimique **caractérisé en ce qu'**il comprend un matériau à conduction ionique selon l'une des revendications 1 à 5.

**10.** Electrode pour générateur électrochimique **caractérisée en ce qu'**elle comprend un matériau à conduction ionique selon l'une des revendications 1 à 5.

**11.** Générateur électrochimique **caractérisé en ce qu'**il comprend un matériau à conduction ionique selon l'une des revendications 1 à 5.

**12.** Utilisation d'un film selon l'une des revendications 6 ou 7 pour empêcher la croissance dendritique dans les batteries au lithium.

**13.** Procédé de fabrication d'un film selon la revendication 6 **caractérisé en ce qu'**il comprend les étapes suivantes :

  - préparation d'un mélange de polymère A, de polymère B, de charge de renfort C, et éventuellement de sel, dans un solvant ;
  - coulage de ce mélange sur un support tel que plaque de verre, de métal, ou de polymère, ou encore une électrode;
  - séchage par exemple dans un four ou une étuve, possiblement sous un flux de gaz.
  - éventuellement réticulation.

**14.** Procédé de fabrication d'un film selon la revendication 6 **caractérisé en ce qu'**il comprend les étapes suivantes :

  - préparation d'un mélange de polymère A, de polymère B, de charge de renfort C, et éventuellement de sel, dans un solvant ;
  - lyophilisation du mélange obtenu ;
  - pressage à chaud pour obtenir un film.

**15.** Procédé de fabrication d'un film infiltré selon la revendication 7 **caractérisé en ce qu'**il comprend les étapes suivantes :

  - mise en oeuvre d'une couche de polymère poreux B, comprenant éventuellement une charge de renfort C et/ou une charge ayant une conductivité électronique ;
  - infiltration du polymère A ou du macromonomère capable de former après polymérisation le polymère A, avec éventuellement une charge de renfort C et/ou un sel et/ou un amorceur de polymérisation, dans les pores du polymère B ;
  - éventuellement, polymérisation du macromonomère capable de former après polymérisation le polymère A.

**Patentansprüche**

**1.** Ionenleitendes Material für einen elektrochemischen Generator, **dadurch gekennzeichnet, dass** es umfasst:

  - 1. mindestens ein Polymer A, das sich von B unterscheidet, mit einer Ionenleitfähigkeit im Bereich zwischen $10^{-5}$ und $10^{-3}$ S/cm, wobei die Ionenleitfähigkeit durch elektrochemische Impedanzspektrometrie bei 25 °C gemessen wird,
- 2. mindestens ein Polymer B mit einer mechanischen Festigkeit, die durch einen Speichermodul $\geq$ 200 MPa, zum Beispiel im Bereich zwischen 200 und 5000 MPa oder zwischen 350 und 1500 MPa gekennzeichnet ist, wobei der Speichermodul durch dynamisch-mechanische Analyse bei 30 °C gemessen wird,
- 3. mindestens einen verstärkenden Füllstoff C.

2. Ionenleitendes Material nach Anspruch 1, **dadurch gekennzeichnet, dass** das Polymer B aus den folgenden Polymeren ausgewählt ist:

- halbkristallinen Polymeren mit einer amorphen Phase im Bereich zwischen einer niedrigen Glasübergangstemperatur (zum Beispiel kleiner oder gleich 20 °C) und einer hohen Schmelztemperatur (zum Beispiel größer oder gleich 110 °C);
- halbkristallinen ionischen Polymeren;
- amorphen Polymeren mit einer Glasübergangstemperatur von größer oder gleich 110 °C;
- sogenannten Hochleistungspolymeren in neutraler oder ionischer Form;
- und deren Mischungen.

3. Ionenleitendes Material nach einem der Ansprüche 1 oder 2, **dadurch gekennzeichnet, dass** das Polymer A aus den Polymeren ausgewählt ist, die eine Oxyalkylenkette in der Hauptkette oder in einer Seitenkette umfassen.

4. Ionenleitendes Material nach einem der vorstehenden Ansprüche, **dadurch gekennzeichnet, dass** der verstärkende Füllstoff C mindestens eine Nanocellulose umfasst, zum Beispiel der verstärkende Füllstoff C mindestens eine Nanocellulose und ein Material, ausgewählt aus Chitin, Chitosan, Gelatine, Sericin und deren Mischungen, umfasst.

5. Ionenleitendes Material nach einem der vorstehenden Ansprüche, **dadurch gekennzeichnet, dass** es weiter mindestens ein Alkali- oder Erdalkalimetallsalz, vorzugsweise ein Lithiumsalz, noch bevorzugter ein Lithiumsalz, ausgewählt aus LiTFSI, $LiPF_6$, $LiBF_4$, $LiAsF_6$ und $LiClO_4$, $LiCF_3SO_3$ und deren Mischungen umfasst.

6. Film, **dadurch gekennzeichnet, dass** er ein ionenleitendes Material nach einem der vorstehenden Ansprüche umfasst.

7. Film nach Anspruch 6, **dadurch gekennzeichnet, dass** es sich um einen infiltrierten Film handelt und dass das Polymer A in das Polymer B infiltriert ist.

8. Separator für einen elektrochemischen Generator, **dadurch gekennzeichnet, dass** er ein ionenleitendes Material nach einem der Ansprüche 1 bis 5 umfasst.

9. Polymerelektrolyt für einen elektrochemischen Generator, **dadurch gekennzeichnet, dass** er ein ionenleitendes Material nach einem der Ansprüche 1 bis 5 umfasst.

10. Elektrode für einen elektrochemischen Generator, **dadurch gekennzeichnet, dass** sie ein ionenleitendes Material nach einem der Ansprüche 1 bis 5 umfasst.

11. Elektrochemischer Generator, **dadurch gekennzeichnet, dass** er ein ionenleitendes Material nach einem der Ansprüche 1 bis 5 umfasst.

12. Verwendung eines Films nach einem der Ansprüche 6 oder 7, um das dendritische Wachstum in Lithiumbatterien zu verhindern.

13. Verfahren zur Herstellung eines Films nach Anspruch 6, **dadurch gekennzeichnet, dass** es die folgenden Schritte umfasst:

- Herstellen einer Mischung aus Polymer A, Polymer B, verstärkendem Füllstoff C, und gegebenenfalls Salz, in einem Lösungsmittel;
- Gießen dieser Mischung auf einen Träger, wie etwa eine Glas-, Metall- oder Polymerplatte oder auch eine Elektrode;
- Trocknen, zum Beispiel in einem Ofen oder einem Trockenschrank, möglicherweise unter einem Gasstrom.

- gegebenenfalls Vernetzen.

14. Verfahren zur Herstellung eines Films nach Anspruch 6, **dadurch gekennzeichnet, dass** es die folgenden Schritte umfasst:

- Herstellen einer Mischung aus Polymer A, Polymer B, verstärkendem Füllstoff C, und gegebenenfalls Salz, in einem Lösungsmittel;
- Gefriertrocknen der erhaltenen Mischung;
- Heißpressen, um einen Film zu erhalten.

15. Verfahren zur Herstellung eines infiltrierten Films nach Anspruch 7, **dadurch gekennzeichnet, dass** es die folgenden Schritte umfasst:

- Einsetzen einer Schicht aus porösem Polymer B, die gegebenenfalls einen verstärkenden Füllstoff C und/oder einen Füllstoff mit einer Elektronenleitfähigkeit umfasst;
- Infiltrieren des Polymers A oder des Makromonomers, das in der Lage ist, nach Polymerisation das Polymer A zu bilden, mit gegebenenfalls einem verstärkenden Füllstoff C und/oder einem Salz und/oder einem Polymerisationsinitiator, in die Poren des Polymers B;
- gegebenenfalls Polymerisieren des Makromonomers, das in der Lage ist, nach Polymerisation das Polymer A zu bilden.

**Claims**

1. An ionically conductive material for electrochemical generator **characterised in that** it comprises:

- 1. at least one polymer A, distinct from B, having an ionic conductivity comprised between $10^{-5}$ and $10^{-3}$ S/cm, the ionic conductivity being measured by electrochemical impedance spectrometry at 25°C,
- 2. at least one polymer B having a mechanical strength **characterised by** a storage module $\geq$ 200 MPa, for example comprised between 200 and 5000 MPa or between 350 and 1500 MPa, the storage module being measured by Dynamic Mechanical Analysis at 30°C,
- 3. at least one reinforcing filler C.

2. The ionically conductive material according to claim 1, **characterised in that** the polymer B is selected from the following polymers:

- semi-crystalline polymers having an amorphous phase comprised between a low glass transition temperature (for example less than or equal to 20°C) and a high melting temperature (for example higher than or equal to 110°C);
- ionic semi-crystalline polymers;
- amorphous polymers having a glass transition temperature greater than or equal to 110°C;
- polymers called high performance polymers, in neutral or ionic form;
- and mixtures thereof.

3. The ionically conductive material according to one of claims 1 or 2, **characterised in that** the polymer A is selected from the polymers comprising an oxyalkylene chain in the main chain or in a pendant chain.

4. The ionically conductive material according to any one of the preceding claims, **characterised in that** the reinforcing filler C comprises at least one nanocellulose, for example, the reinforcing filler C comprises at least one nanocellulose and a material selected from chitin, chitosan, gelatin, sericin and mixtures thereof.

5. The ionically conductive material according to any one of the preceding claims, **characterised in that** it further comprises at least one alkali or alkaline earth metal salt, preferably a lithium salt, even more preferably a lithium salt selected from LiTFSI, $LiPF_6$, $LiBF_4$, $LiAsF_6$ and $LiClO_4$, $LiCF_3SO_3$ and mixtures thereof.

6. A film **characterised in that** it comprises an ionically conductive material according to any one of the preceding claims.

7. The film according to claim 6, **characterised in that** it is an infiltrated film and **in that** the polymer A is infiltrated into the polymer B.

8. A separator for an electrochemical generator **characterised in that** it comprises an ionically conductive material according to one of claims 1 to 5.

9. A polymer electrolyte for electrochemical generator **characterised in that** it comprises an ionically conductive material according to one of claims 1 to 5.

10. An electrode for electrochemical generator **characterised in that** it comprises an ionically conductive material according to one of claims 1 to 5.

11. An electrochemical generator **characterised in that** it comprises an ionically conductive material according to one of claims 1 to 5.

12. A use of a film according to one of claims 6 or 7, to prevent the dendritic growth in lithium batteries.

13. A method for producing a film according to claim 6, **characterised in that** it comprises the following steps:

   - preparing a mixture of polymer A, polymer B, reinforcing filler C, and optionally salt, in a solvent;
   - pouring this mixture onto a support such as a glass, metal, or polymer plate, or even an electrode;
   - drying for example in a furnace or an oven, possibly under a gas stream.
   - optionally crosslinking.

14. The method for producing a film according to claim 6, **characterised in that** it comprises the following steps:

   - preparing a mixture of polymer A, polymer B, reinforcing filler C, and optionally salt, in a solvent;
   - freeze-drying the obtained mixture;
   - hot pressing to obtain a film.

15. The method for producing an infiltrated film according to claim 7, **characterised in that** it comprises the following steps:

   - implementing a porous polymer layer B, optionally comprising a reinforcing filler C and/or a filler having an electronic conductivity;
   - infiltrating the polymer A or the macromonomer capable of forming the polymer A, after polymerisation, with optionally a reinforcing filler C and/or a salt and/or a polymerisation initiator, in the pores of the polymer B;
   - optionally, polymerising the macromonomer capable of forming the polymer A, after polymerisation.

Figure 1A

Figure 1B

Figure 2A

Figure 2B

Figure 3A

Figure 3B

Figure 4A

Figure 4B

Figure 5

Figure 6

Figure 7

Figure 8A

Figure 8B

Figure 8C

Figure 8D

Figure 9

Figure 10

Figure 11

Figure 12

Figure 13

Figure 14

Figure 15

Figure 16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140227605 A1

**Littérature non-brevet citée dans la description**

- **D. DJIAN ; F. ALLOIN ; S. MARTINET ; H. LIGNER ; J-Y. SANCHEZ.** *J. Power Sources,* 2007, vol. 172, 416
- **M. GAUTHIER ; A. BÉLANGER ; P. BOUCHARD ; B. KAPFER ; S. RICARD ; G. VASSORT ; M. ARMAND ; J-Y. SANCHEZ ; L. KRAUSE.** arge lithium polymer battery development The immobile solvent concept. *J. Power Sources,* 1995, vol. 54, 163
- **LALIA, B.S. ; SAMAD, Y.A. ; HASHAIKEH, R.** Nanocrystalline cellulose-reinforced composite mats for lithium-ion batteries: electrochemical and thermomechanical performance. *J Solid State Electrochem,* 2013, vol. 17, 575-581

- **AZIZI SAMIR M. A. S ; ALLOIN F. ; SANCHEZ J.-Y. ; DUFRESNE A.** Cellulose nanocrystals reinforced poly(oxyethylene). *Polymer,* 2004, vol. 45 (12), 4149-4157
- Cross-Linked Nanocomposite Polymer Electrolytes Reinforced with Cellulose Whiskers. **AZIZI SAMIR M. A. S ; ALLOIN F. ; SANCHEZ J.-Y. ; DUFRESNE A.** Macromolecules. American Chemical Society, 2004, vol. 37, 4839-4844
- **J.R. CRAVEN et al.** *MaKromol. Chem. Rapid Comm.,* 1986, vol. 7, 81
- **F. ALLOIN et al.** *J. of Electrochem. Soc.,* 1994, vol. 141 (7), 1915
- **WITTE et al.** *ournal of membrane science,* 1996, vol. 117, 1-31
- **WITTE et al.** *Journal of membrane science,* 1996, vol. 117, 1-31